(19) Europäisches Patentamt / European Patent Office / Office européen des brevets

(11) **EP 2 534 529 B1**

(12) **FASCICULE DE BREVET EUROPEEN**

(45) Date de publication et mention de la délivrance du brevet:
**03.02.2016 Bulletin 2016/05**

(21) Numéro de dépôt: **11707706.5**

(22) Date de dépôt: **08.02.2011**

(51) Int Cl.:
*G02C 7/06* (2006.01)      *G02C 7/02* (2006.01)

(86) Numéro de dépôt international:
**PCT/IB2011/050528**

(87) Numéro de publication internationale:
**WO 2011/098951 (18.08.2011 Gazette 2011/33)**

(54) **LENTILLE OPHTALMIQUE MULTIFOCALE PROGRESSIVE**

GLEITSICHTLINSE

PROGRESSIVE MULTIFOCAL OPHTHALMIC LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.02.2010 FR 1050896**

(43) Date de publication de la demande:
**19.12.2012 Bulletin 2012/51**

(73) Titulaire: **Essilor International (Compagnie Générale d'Optique) 94220 Charenton Le Pont (FR)**

(72) Inventeurs:
- **BERTHEZENE, Marie-Anne**
  **F-94220 Charenton-le-Pont (FR)**
- **BOURDONCLE, Bernard**
  **F-94220 Charenton-le-Pont (FR)**
- **CALIXTE, Laurent**
  **F-94220 Charenton-le-Pont (FR)**
- **GUILLOUX, Cyril**
  **F-94220 Charenton-le-Pont (FR)**
- **MOUSSET, Soazic**
  **F-94220 Charenton-le-Pont (FR)**
- **PAILLE, Damien**
  **F-94220 Charenton-le-Pont (FR)**

(74) Mandataire: **Cabinet Plasseraud 52, rue de la Victoire 75440 Paris Cedex 09 (FR)**

(56) Documents cités:
EP-A1- 1 744 202      WO-A1-2006/045642
WO-A1-2007/063365      FR-A1- 2 820 515
US-A1- 2008 273 169

- "Shamir Piccolo Progressive Lenses", SHAMIR OPTICAL INDUSTRY, 25 octobre 1999 (1999-10-25), XP002602330,
- "Verres Progressifs AO Compact", AMERICAN OPTICAL, 25 octobre 1999 (1999-10-25), XP002602331,

## Description

La présente invention concerne des lentilles finies et semi-finies, ophtalmiques, multifocales et progressives comportant une surface complexe comprenant une zone de vision de loin, une zone de vision de près, une zone de vision intermédiaire, et une méridienne principale de progression traversant ces trois zones.

Il peut être prescrit à un porteur une correction en puissance, positive ou négative. Pour les porteurs presbytes, la valeur de la correction de puissance est différente en vision de loin et en vision de près, du fait de difficultés d'accommodation en vision de près. La prescription est alors composée d'une valeur de puissance en vision de loin et d'une addition représentative de l'incrément de puissance entre la vision de loin et la vision de près. L'addition est qualifiée d'addition prescrite. Les lentilles ophtalmiques qui compensent la presbytie sont des lentilles multifocales, les plus adaptées étant les lentilles multifocales progressives.

Les lentilles ophtalmiques multifocales progressives sont maintenant bien connues. De telles lentilles sont utilisées pour compenser la presbytie et permettent au porteur de lunettes d'observer des objets dans une large gamme de distances, sans avoir à retirer ses lunettes. Les lentilles multifocales progressives comportent typiquement une zone de vision de loin, située dans le haut de la lentille, une zone de vision de près, située dans le bas de la lentille, une zone intermédiaire reliant la zone de vision de près et la zone de vision de loin, ainsi qu'une méridienne traversant les trois zones.

Le document FR-A-2 699 294 décrit dans son préambule les différents éléments d'une telle lentille ophtalmique multifocale progressive, ainsi que les travaux menés par la demanderesse pour améliorer le confort des porteurs de telles lentilles. On se référera à ce document pour plus de précisions sur ces différents points.

La demanderesse a aussi proposé, par exemple dans les brevets US-A-5 270 745 ou US-A-5 272 495 de faire varier la méridienne, et notamment la position en un point de contrôle de la vision de près, en fonction de l'addition et de l'amétropie.

La demanderesse a encore proposé, pour mieux satisfaire les besoins visuels des presbytes et améliorer le confort des lentilles multifocales progressives, diverses améliorations (US-A-5 270 745, US-A-5 488 442, FR-A-2 704 327).

Habituellement, les lentilles multifocales progressives comportent une surface asphérique (également appelée surface complexe), par exemple la surface opposée au porteur de lunettes, et une surface sphérique ou torique, dite surface de prescription. On entend par surface asphérique, une surface différente d'une partie de sphère. La surface sphérique ou torique permet d'adapter la lentille à l'amétropie du porteur, de sorte qu'une lentille multifocale n'est généralement définie que par sa surface complexe. La définition de la lentille se limite dans un tel cas à la recherche d'une surface optimisée pour la surface complexe.

Comme il est bien connu, une telle surface complexe est généralement définie par l'altitude de tous ses points. On utilise aussi les paramètres constitués par les courbures minimales et maximales en chaque point, ou plus couramment leur demi-somme et leur différence. Cette demi-somme et la valeur absolue de cette différence multipliées par un facteur n-1, n étant l'indice de réfraction du matériau de la lentille, sont appelées sphère moyenne et cylindre.

On définit des familles de lentilles multifocales progressives, chaque lentille d'une famille étant caractérisée par une addition optique, qui correspond à la variation de puissance entre la zone de vision de loin et la zone de vision de près. Plus précisément, l'addition optique, notée $Add_{opt}$, correspond à la variation de puissance entre un point L de la zone de vision de loin et un point P de la zone de vision de près, qui sont appelés respectivement point de référence pour la vision de loin et point de référence pour la vision de près, et qui représentent les points d'intersection du regard et de la surface complexe de la lentille pour une vision à l'infini et pour une vision de lecture. Pour une surface de lentille, l'addition surfacique $Add_{SURF}$ peut s'exprimer comme la variation de sphère moyenne entre le point L de la zone de vision de loin et le point P de la zone de vision de près. L'addition surfacique ou optique correspond alors généralement à l'addition prescrite dans le cas usuel où la lentille comprend une surface complexe et une surface sphérique ou torique. Dans une même famille de lentilles, l'addition varie d'une lentille à l'autre de la famille entre une valeur d'addition minimale et une valeur d'addition maximale. Habituellement, les valeurs minimale et maximale d'addition sont respectivement de 0,75 dioptrie et 3,5 dioptries, et l'addition varie de 0,25 dioptrie en 0,25 dioptrie d'une lentille à l'autre de la famille.

Dans une famille de lentille, des lentilles de même addition peuvent différer habituellement en fonction de l'amétropie, en un point de référence par la valeur de la sphère moyenne, mesurée sur la face opposée à l'oeil. On peut par exemple choisir de mesurer la base au point L de référence pour la vision de loin.

Pour des lentilles multifocales progressives, on définit ainsi par le choix d'un couple (addition, base) un ensemble ou jeu de faces complexes. Habituellement, on peut ainsi définir 5 valeurs de bases et 12 valeurs d'additions, soit soixante faces complexes. Pour chaque couple (addition, base), une lentille communément appelée « semi-finie » peut être réalisée dont l'addition est apportée par la surface complexe par la variation de courbure entre la zone de vision de loin et la zone de vision de près. Une telle lentille présente suffisamment de matière pour que le fabricant puisse y tailler la face opposée à la surface complexe qui permet d'obtenir la lentille de prescription souhaitée.

La prescription en matière ophtalmique peut comprendre en plus de la prescription de puissance une prescription d'astigmatisme. Une telle prescription est formée d'une valeur d'axe (en degrés) et d'une valeur d'amplitude (en dioptries). La valeur d'amplitude représente la différence entre les puissances minimales et maximales dans une direction donnée qui permettent de corriger le défaut visuel d'un porteur. Selon la convention choisie, l'axe représente l'orientation d'une des deux puissances par rapport à un axe de référence et dans un sens de rotation convenu. En pratique, la convention TABO est utilisée. Dans cette convention, l'axe de référence est horizontal et le sens de rotation est le sens trigonométrique direct pour chaque oeil, lorsque l'on regarde le porteur. Une valeur d'axe de +45° représente donc un axe orienté obliquement, qui lorsque l'on regarde le porteur, s'étend du quadrant situé en haut à droite jusqu'au quadrant situé en bas à gauche. Une telle prescription d'astigmatisme est mesurée sur le porteur regardant en vision de loin. On utilise le terme astigmatisme pour désigner le couple (amplitude, angle); bien qu'il s'agisse d'un abus de langage, on utilise aussi parfois ce terme pour désigner l'amplitude de l'astigmatisme. Le contexte permet à l'homme du métier de comprendre quelle acception est entendue. Il est aussi connu de l'homme du métier que la prescription en puissance et astigmatisme d'un porteur sont usuellement désignés et notés sous les termes de sphère, de cylindre et d'axe. Les lentilles ophtalmiques corrigeant la prescription d'astigmatisme d'un porteur peuvent être constituées de surfaces sphéro-cylindriques.

Par ailleurs, les lois de l'optique des tracés de rayons entraînent l'apparition de défauts optiques quand les rayons lumineux s'écartent de l'axe central de toute lentille. Ces défauts connus qui comprennent entre autres un défaut de puissance et un défaut d'astigmatisme peuvent être appelés de façon générique défauts d'oblicité des rayons. L'homme de l'art sait compenser ces défauts comme l'illustrent les documents EP-A-0 990 939, US-A-5 270 746 (EP-A-0 461 624) et WO-A-98 12590.

Les lentilles ophtalmiques multifocales, quel que soit le type auquel elles appartiennent, présentent inévitablement des aberrations optiques (astigmatisme résultant, défaut de puissance, déviations prismatiques ...) qui impliquent une adaptation plus ou moins longue et affectent le confort de vision, en vision statique comme en vision dynamique. On entend par le terme de vision dynamique la vision des objets se déplaçant dans le champ de vision, par mouvement propre ou par déplacement du porteur des lentilles. En outre, il serait intéressant de réduire les défauts en vision périphérique. En fait, les lentilles progressives existantes permettent une vision largement satisfaisante lorsque le porteur fixe un objet qui est situé droit devant lui, à une distance quelconque. En revanche, elles présentent des aberrations notables en vision périphérique.

Le document EP-A1-1 744 202 décrit des lentilles progressives ayant un astigmatisme résultant réduit. Il existe un besoin pour une lentille multifocale progressive permettant de remédier aux inconvénients précédemment évoqués et notamment d'améliorer le confort du porteur.

A cet effet, l'invention propose une lentille ophtalmique multifocale progressive telle que définie dans la revendication 1.

L'invention concerne également un équipement visuel comprenant une lentille selon l'un des modes de réalisations précédemment décrit.

D'autres caractéristiques et avantages de l'invention apparaîtront à la lecture de la description détaillée qui suit

- figures 1 à 3, des représentations schématiques d'un système optique oeil et lentille ;
- figures 4 à 6, des caractérisations en terme surfacique d'un exemple de lentille ;
- figures 7 à 9, des caractérisations en terme surfacique d'un exemple de lentille ;
- figures 10 à 12, des caractérisations en terme surfacique d'un exemple de lentille ;
- figures 13 à 15, des caractérisations en terme optique d'un exemple de lentille ;
- figures 16 à 18, des caractérisations en terme optique d'un exemple de lentille ;
- figure 19 à 21, des caractérisations en terme optique d'un exemple de lentille.

Il est proposé une lentille multifocale progressive présentant des caractéristiques particulières. Une telle lentille permet d'obtenir une vision périphérique améliorée. Il en résulte un confort accru pour le porteur.

Il est proposé de définir les caractéristiques des lentilles en termes de sphère moyenne et de cylindre. Ainsi, de façon connue en soi, en tout point d'une surface asphérique, une sphère moyenne SPH peut être définie par la formule suivante:

$$SPH = \frac{n-1}{2}\left(\frac{1}{R_1} + \frac{1}{R_2}\right)$$

où $R_1$ et $R_2$ sont les rayons de courbure maximal et minimal exprimés en mètres, et n l'indice du matériau constituant la lentille.

Un cylindre CYL peut aussi être défini par la formule:

$$CYL = \frac{n-1}{2}\left|\frac{1}{R_1} - \frac{1}{R_2}\right|$$

Les caractéristiques de la face complexe de la lentille peuvent être exprimées à l'aide de la sphère moyenne et du cylindre.

Par ailleurs, une lentille multifocale progressive peut aussi être définie par des caractéristiques optiques prenant en considération la situation du porteur des lentilles.

Dans la suite de la description, on fait référence à des termes tels que « haut », « bas », « horizontal », «vertical», « au-dessus », «en dessous », ou encore à d'autres termes indiquant des positions relatives. Il est entendu que ces termes sont à comprendre dans les conditions du porté de la lentille et qu'ils sont à prendre en référence par rapport au point de référence prisme $P_{PRP}$ lorsqu'il s'agit d'une surface ou par rapport à la croix de montage lorsqu'il s'agit de la lentille. Le point de référence prisme $P_{PRP}$ et la croix de montage sont définis plus bas.

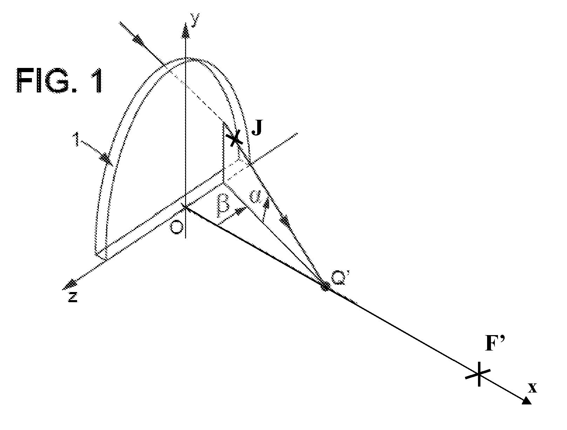

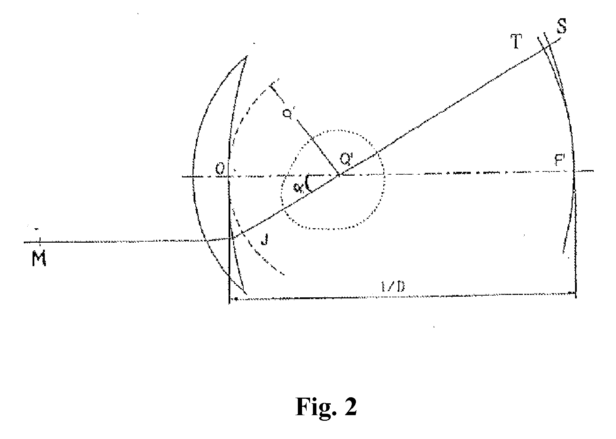

Les figures 1 à 2 montrent des schémas de systèmes optiques oeil et lentille, permettant d'illustrer les définitions utilisées dans la description. Plus précisément, la figure 1 représente un schéma d'une vue en perspective d'un tel système illustrant les paramètres $\alpha$ $\beta$ utilisés pour définir une direction de regard. La figure 2 est une vue dans un plan vertical parallèle à un axe antéropostérieur de la tête du porteur et passant par la centre de rotation de l'oeil dans un cas où le paramètre $\beta$ vaut 0.

On appelle Q' le centre de rotation de l'oeil; l'axe Q'F', représenté sur la figure 2 en traits mixtes, est l'axe horizontal passant par le centre de rotation de l'oeil et s'étendant devant le porteur - autrement dit l'axe Q'F' correspond à la direction primaire du regard. Cet axe coupe la surface complexe de la lentille en un point appelé croix de montage, qui est matérialisé sur les lentilles pour permettre le positionnement des lentilles par un opticien. On définit le point O, point d'intersection de la surface arrière de la lentille et de l'axe Q'F'. On définit une sphère des sommets, de centre Q', et de rayon q', qui est tangente à la surface arrière de la lentille en un point de l'axe horizontal. A titre d'exemple, une valeur du rayon q' de 25,5 mm correspond à une valeur courante et fournit des résultats satisfaisants lors du porté des lentilles.

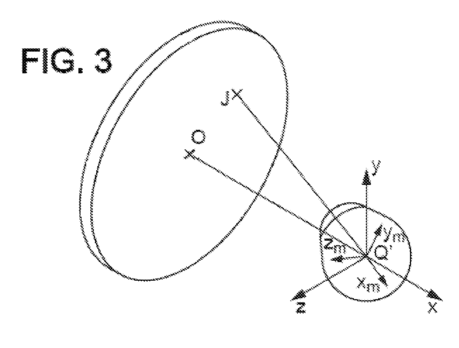

Une direction donnée du regard - représentée en traits pleins sur la figure 3 - correspond à une position de l'oeil en rotation autour de Q' et à un point J de la sphère des sommets; l'angle P est l'angle formé entre l'axe Q'F' et la projection de la droite Q'J sur le plan horizontal contenant l'axe Q'F'; cet angle apparaît sur le schéma de la figure 1. L'angle $\alpha$ est l'angle formé entre l'axe Q'J et la projection de la droite Q'J sur le plan horizontal contenant l'axe Q'F cet angle apparaît sur les schémas des figures 1 et 2. Une direction donnée du regard correspond donc à un point J de la sphère des sommets ou à un couple $(\alpha, \beta)$. Plus la valeur de l'angle d'abaissement du regard $\alpha$ est positive, plus le regard s'abaisse et plus la valeur est négative, plus le regard se lève.

L'image d'un point de l'espace objet, dans une direction du regard, et à une distance objet donnée, se forme entre deux points S et T correspondant à des distances focales minimale et maximale, qui seraient des distances focales sagittale et tangentielle dans le cas de surfaces de révolution. Sur l'axe optique, l'image d'un point de l'espace objet à l'infini se forme au point F'. La distance D est la focale du système oeil-lentille.

On appelle ergorama une fonction associant à chaque direction du regard la distance habituelle du point objet. Typiquement, en vision de loin suivant la direction primaire du regard, le point objet est à l'infini. En vision de près, suivant une direction correspondant sensiblement à un angle $\alpha$ de l'ordre de 35° et à un angle P en valeur absolue de l'ordre de 5° vers le côté nasal, la distance objet est de l'ordre de 30 à 50 cm. Pour plus de détails sur une définition possible d'un ergorama, on pourra consulter FR-A-2 753 805 (US-A-6 318 859). Ce document décrit un ergorama, sa définition et son procédé de modélisation. Un ergorama particulier consiste à ne prendre que des points à l'infini. Pour le procédé de l'invention, on peut considérer des points à l'infini ou non. L'ergorama peut aussi être fonction de l'amétropie du porteur.

A l'aide de ces éléments, on peut définir une puissance et un astigmatisme, dans chaque direction du regard. Pour une direction du regard $(\alpha, \beta)$, on considère un point M objet à une distance objet donnée par l'ergorama. Dans l'espace objet, on définit, pour le point M sur le rayon lumineux correspondant, une proximité objet ProxO comme l'inverse de la distance MJ entre le point M et le point J de la sphère des sommets:

$$ProxO = 1/MJ$$

Ceci permet un calcul de la proximité objet dans le cadre d'une approximation lentille mince en tout point de la sphère des sommets, qui est utilisée pour la détermination de l'ergorama. Pour une lentille réelle, on peut à l'aide d'un programme de tracé de rayons considérer la proximité objet comme l'inverse de la distance entre le point objet et la surface avant de la lentille, sur le rayon correspondant.

Toujours pour la même direction du regard (α,β), l'image d'un point M ayant une proximité objet donnée se forme entre deux points S et T correspondant respectivement à des distances focales minimale et maximale (qui seraient des distances focales sagittale et tangentielle dans le cas de surfaces de révolution). On appelle proximité image du point M, la quantité ProxI:

$$\mathrm{Pr}\,oxI = \frac{1}{2}\left(\frac{1}{JT} + \frac{1}{JS}\right)$$

Par analogie avec le cas de la lentille mince, on définit ainsi, dans une direction donnée du regard et pour une proximité objet donnée, i.e. pour un point de l'espace objet sur le rayon lumineux correspondant, une puissance optique Pui comme la somme de la proximité image et de la proximité objet.

$$Pui = \mathrm{Pr}\,oxO + \mathrm{Pr}\,oxI$$

Avec les mêmes notations, on définit dans chaque direction du regard et pour une proximité objet donnée, un astigmatisme Ast comme

$$Ast = \left|\frac{1}{JT} - \frac{1}{JS}\right|$$

Cette définition correspond à l'astigmatisme du faisceau de rayons créé par la lentille. On remarque que la définition fournit, dans la direction primaire du regard, la valeur classique de l'astigmatisme. L'angle de l'astigmatisme communément appelé axe est l'angle γ. L'angle γ est mesuré dans le repère {Q', $x_m$, $y_m$, $z_m$} lié à l'oeil. Il correspond à l'angle avec lequel se forme l'image S ou T en fonction de la convention utilisée par rapport à la direction $z_m$ dans le plan (Q', $z_m$, $y_m$).

On obtient ainsi des définitions possibles de la puissance optique et de l'astigmatisme de la lentille, dans les conditions du porté, qui peuvent être calculés comme expliqué dans la publication B. Bourdoncle et autres, « Ray tracing through progressive ophthalmic lenses », 1990 International Lens Design Conference, D.T. Moore ed., Proc. Soc. Photo. Opt. Instrum. Eng. On entend par conditions de port standard la position de la lentille par rapport à l'oeil d'un porteur moyen, définie notamment par un angle pantoscopique de -8°, une distance lentille-oeil de 12 mm et un galbe de 0°.

La figure 3 représente une vue en perspective dans une configuration où les paramètres α et β sont non nuls. Il est ainsi mis en évidence l'effet de la rotation de l'oeil en montrant un repère {x, y, z} fixe et un repère {$x_m$, $y_m$, $z_m$} lié à l'oeil. Le repère {x, y, z} a pour origine le point Q'. L'axe x est l'axe Q'O et est orienté de la lentille vers l'oeil. L'axe y est vertical et orienté vers le haut. L'axe z est tel que le repère {x, y, z} soit orthonormé direct. Le repère {$x_m$, $y_m$, $z_m$} est lié à l'oeil et a pour centre le point Q'. L'axe $x_m$ correspond à la direction JQ' du regard. Ainsi, pour la direction primaire du regard, les deux repères {x, y, z} et {$x_m$, $y_m$, $z_m$} coïncident. Il est ainsi connu que les propriétés d'une lentille finie peuvent être caractérisées de plusieurs manières et notamment surfacique et optique. Une caractérisation surfacique est ainsi équivalente à une caractérisation optique. Dans le cas d'une lentille semi-finie, seule une caractérisation en surfacique peut être utilisée étant entendu qu'une caractérisation en optique suppose que la lentille ait été usinée à la prescription d'un porteur. Au contraire, dans le cas d'une lentille ophtalmique, la caractérisation peut être de type surfacique ou optique, les deux caractérisations permettant de décrire le même objet de deux points de vue différents.

Les grandeurs en surfacique s'expriment par rapport à des points. Les points sont situés à l'aide d'ordonnées ou d'abscisses dans un repère dont l'origine est généralement le point de référence prisme $P_{PRP}$. Le constructeur de la lentille est tenu de marquer le point de référence prisme afin que tout opticien puisse déterminer les valeurs de prisme de la lentille. Le prisme mesuré en ce point est alors la résultante du prisme prescrit et du prisme utilisé pour l'usinage. Le point de référence prisme correspond généralement au milieu de micro-gravures réalisées sur la lentille. Le constructeur de la lentille est également tenu de marquer de telles micro-gravures dans cette situation.

Les grandeurs en optique s'expriment pour des directions de regard. Les directions de regard sont usuellement repérées par leur abaissement et leur azimut dans un repère dont l'origine est le centre de rotation de l'oeil. Lorsque la lentille est montée devant l'oeil, la croix de montage est placée devant le pupille de l'oeil pour une position primaire du regard. On entend par position primaire du regard, un porteur regardant droit devant. Dans le repère choisi, la croix de montage correspond alors à un abaissement de 0° et un azimut de 0°.

Sur les lentilles de la demanderesse, la direction de regard passant par la croix de montage est située 8° au dessus de la direction passant par le point de référence prisme; ou, dans le cas d'une caractérisation surfacique de la lentille, 4 mm au dessus du centre géométrique (0,0) de la lentille.

En outre, il peut être remarqué lorsque le point de référence prisme correspond au milieu de micro-gravures réalisées sur la lentille, la connaissance des micro-gravures permet de repérer à la fois le point de référence prisme et la croix de montage.

Nous allons étudier la surface permettant d'obtenir un meilleur confort pour le porteur dans une partie sur la caractérisation surfacique. Puis, nous étudierons comment s'expriment en termes optiques les propriétés surfaciques pour une lentille comportant la surface dans une partie caractérisation optique.

Caractérisation surfacique

Il est considéré une lentille ophtalmique multifocale progressive comprenant une surface asphérique présentant en tout point une valeur de sphère moyenne et une valeur de cylindre tel que défini plus haut. La surface comprend une zone de vision de loin comportant un point de référence pour la vision de loin et une zone de vision de près comportant un point de référence pour la vision de près. La surface comprend également une addition surfacique $Add_{SURF}$ définie comme la différence de sphère moyenne entre le point de référence pour la vision de près et le point de référence pour la vision de loin, et une zone de vision intermédiaire située entre la zone de vision de loin et la zone de vision de près. La surface comporte une méridienne principale de progression traversant les trois zones et séparant la surface en une zone temporale et une zone nasale. Une portion de la méridienne traversant la zone de vision de loin définit un axe vertical. La lentille comporte en outre une croix de montage $C_M$ et un point de référence prisme $P_{PRP}$. Le point de référence prime $P_{PRP}$ définit avec l'axe vertical de la méridienne et l'axe reliant les micro-gravures un repère. Le repère permet de définir chacun des points de la lentille par une abscisse relative à l'axe horizontal et une ordonnée relative à l'axe vertical. Le point de référence prisme a une abscisse et une ordonnée nulles. Comme expliqué plus haut, la lentille peut être une lentille finie ou une lentille semi-finie.

La lentille remplit une première condition surfacique dite « condition surfacique 1 ». Selon la « condition surfacique 1 », la lentille présente une longueur de progression inférieure à 14,5 mm. La longueur de progression est définie comme la différence d'ordonnées entre l'ordonnée de la croix de montage et l'ordonnée du point de la méridienne où la variation de sphère moyenne par rapport à la valeur de la sphère moyenne au point de référence pour la vision de loin atteint 85% de l'addition surfacique. Cela permet d'améliorer le confort du porteur par rapport à une stratégie oeil-tête verticale, l'oeil ayant moins à se déplacer dans la direction verticale pour obtenir la correction adaptée à sa vision de près. Un tel effet est encore accru si la lentille remplit une « condition surfacique 1bis », c'est-à-dire si la lentille présente une longueur de progression inférieure à 13,5 mm.

La lentille remplit une première condition surfacique dite « condition surfacique 2 ». Selon la « condition surfacique 2 », la lentille présente une différence de rapport, noté Dsurfacique2, entre la valeur de cylindre et l'addition surfacique $Add_{SURF}$ inférieure à 0,2 en valeur absolue pour tout couple de points de la lentille symétriques par rapport à la croix de montage $C_M$ et ayant la même ordonnée que la croix de montage $C_M$, l'abscisse de chaque point étant inférieure à 20 millimètres en valeur absolue. Cela permet d'assurer une certaine symétrie de la répartition du cylindre à la hauteur de la croix de montage. Cela permet ainsi d'améliorer la vision binoculaire pour le porteur en vision de loin. Une telle condition permet d'assurer ainsi un confort optimal au porteur en vision de loin. En effet, lorsque le porteur regarde au loin en décalant légèrement les yeux horizontalement, il regardera à travers la partie nasale d'une lentille avec un oeil et à travers la partie temporale de l'autre lentille avec l'autre oeil. Or, un bon équilibre binoculaire est obtenu si les qualités perçues sont sensiblement les même pour chacun des yeux. Une telle situation correspond à des aberrations optiques perçues sensiblement identiques pour les deux yeux. En garantissant que les valeurs de cylindre normalisées à l'addition surfacique soient sensiblement symétriques de part et d'autre de la croix de montage, l'oeil gauche et l'oeil droit du porteur rencontrent sensiblement les mêmes défauts optiques. Un bon équilibre perceptif entre les deux yeux en vision de loin est ainsi assuré car la zone horizontale au niveau de la croix de montage est la plus sollicitée par un porteur fixant un point en vision de loin tout en décalant les yeux latéralement. Un tel effet est encore accru si la lentille remplit une « condition surfacique 2bis », c'est-à-dire si la lentille présente une différence de rapport entre la valeur de cylindre et l'addition surfacique inférieure à 0,1 en valeur absolue pour tout couple de points de la lentille symétriques par rapport à la croix de montage $C_M$ situés à la même ordonnée que la croix de montage $C_M$, l'abscisse de chaque point étant limitée à 20 millimètres en valeur absolue.

La lentille remplit également une combinaison de conditions surfaciques dites 3 et 4 qui permet de limiter les aberrations en périphérie. Une telle combinaison peut s'exprimer de plusieurs manières, la surface remplissant une telle combinaison étant la même et présentant le même effet d'amélioration du confort du porteur.

La lentille peut ainsi remplir des conditions surfaciques dites 3A et 4A. On définit alors sur la lentille un cercle regroupant l'ensemble des points de la lentille ayant la même abscisse et la même ordonnée que des points situés sur un cercle dans le plan du repère, de diamètre 35 millimètres et centré sur un point situé 8,5 millimètres en dessous de la croix de montage et décalé horizontalement du côté nasal de 1,25 millimètre, ainsi qu'un disque regroupant l'ensemble des points de la lentille ayant la même abscisse et la même ordonnée que des points situés à l'intérieur dudit cercle. Selon la « condition surfacique 3A », la lentille présente un premier rapport noté Rsurfacique3A entre, la valeur maximale de cylindre pour l'ensemble des points du cercle d'une part, et l'addition surfacique $Add_{SURF}$ d'autre part, inférieur à 0,7. En outre, lorsque la lentille remplit la « condition surfacique 4A », elle présente un deuxième rapport noté Rsurfacique4A entre la valeur maximale de cylindre pour l'ensemble des points du disque d'une part et l'addition surfacique $Add_{SURF}$ d'autre part inférieur ou égal à 1,05.

La combinaison des conditions 3A et 4A permet de contrôler de manière large les aberrations de la lentille sur l'ensemble des points situés à l'intérieur du cercle et de contrôler de manière plus stricte les aberrations sur un ensemble de points plus réduit, en l'occurrence sur la périphérie du cercle. Cela permet donc de limiter les aberrations en vision périphérique. La vision périphérique du porteur et notamment celle en vision dynamique s'en trouve améliorée. Le confort du porteur est ainsi augmenté. Un tel effet est encore accru si la lentille remplit en outre une « condition surfacique 3Abis », c'est-à-dire si la lentille présente un premier rapport Rsurfacique3A inférieur à 0,65. Une telle augmentation de l'effet se retrouve aussi lorsque la lentille remplit en outre une « condition surfacique 4Abis » c'est-à-dire si la lentille présente un deuxième rapport Rsurfacique4A inférieur ou égal à 0,75.

La lentille remplit alors les conditions surfaciques dites 1, 2, 3A et 4A. Une telle combinaison permet que la lentille offre une vision périphérique améliorée. Le confort du porteur s'en trouve accru.

De manière alternative, la lentille peut remplir des conditions surfaciques dites 3B et 4B. On définit alors sur la lentille un disque regroupant l'ensemble des points de la lentille ayant la même abscisse et la même ordonnée que des points situés à l'intérieur d'un cercle dans le plan du repère de diamètre 60 millimètres et centré sur le point de référence prisme $P_{PRP}$. Selon la « condition surfacique 3B », la lentille présente un premier rapport noté Rsurfacique3B entre la valeur de cylindre et l'addition surfacique inférieur à 0,7, pour tout point de la lentille ayant une ordonnée de -20 millimètres, c'est-à-dire 20 millimètres en dessous du point de référence prisme dans le repère défini plus haut, et une abscisse inférieure à 20 millimètres en valeur absolue. En outre, lorsque la lentille remplit la « condition surfacique 4B », elle présente un deuxième rapport noté Rsurfacique4B entre la valeur de cylindre et l'addition surfacique inférieur ou égal à 1,05, pour tout point du disque. La combinaison des conditions 3B et 4B permet de contrôler de manière large les aberrations de la lentille sur l'ensemble des points situés sur le disque et de contrôler de manière plus stricte les aberrations sur un ensemble de points plus réduit, en l'occurrence sur un segment. La combinaison des conditions 3B et 4B permet donc de limiter les aberrations en vision périphérique. La vision périphérique du porteur et notamment celle en vision dynamique s'en trouve améliorée. Le confort du porteur est ainsi augmenté. Un tel effet est encore accru si la lentille remplit en outre une « condition surfacique 3Bbis », c'est-à-dire si la lentille présente un premier rapport inférieur à 0,65. Une telle augmentation de l'effet se retrouve aussi lorsque la lentille remplit en outre la « condition surfacique 4Bbis » c'est-à-dire si la lentille présente un deuxième rapport inférieur ou égal à 0,75.

La lentille remplit alors les conditions surfaciques 1, 2, 3B et 4B. Une telle combinaison permet que la lentille offre une vision périphérique améliorée. Le confort du porteur s'en trouve accru.

En variante, la lentille peut remplir aussi des conditions surfaciques dites conditions surfaciques 3C et/ou 3D et 4C. On définit alors sur la lentille un disque regroupant l'ensemble des points de la lentille ayant la même abscisse et la même ordonnée que des points situés à l'intérieur d'un cercle dans le plan du repère, de diamètre 60 millimètres et centré sur le point de référence prisme $P_{PRP}$. Selon la «condition surfacique 3C», la lentille présente un premier rapport noté Rsurfacique3C entre la valeur de cylindre et l'addition surfacique inférieur à 0,72, pour tout point de la lentille de la zone temporale ayant une abscisse de 20 millimètres en valeur absolue et dont l'ordonnée est inférieure à 20 millimètres en valeur absolue. La lentille peut, alternativement ou en supplément de la condition surfacique 3C, remplir une « condition surfacique 3D ». Selon la « condition surfacique 3D », la lentille présente un deuxième rapport noté Rsurfacique3D entre la valeur de cylindre et l'addition surfacique inférieur à 0,72, pour tout point de la lentille de la zone nasale ayant une abscisse de 22 millimètres en valeur absolue et dont l'ordonnée est inférieure à 20 millimètres en valeur absolue. En outre, lorsque la lentille remplit la « condition surfacique 4C », elle présente un troisième rapport Rsurfacique4C entre la valeur de cylindre et l'addition surfacique inférieur ou égal à 0,95, pour tout point du disque. La combinaison des conditions 3C et/ou 3D et 4C permet de contrôler de manière large les aberrations de la lentille sur l'ensemble des points situés à l'intérieur du disque et de contrôler de manière plus stricte les aberrations sur un élément de points plus réduit, en l'occurrence sur un segment vertical situé du côté temporal et/ou nasal. Cela permet donc de limiter les aberrations en vision périphérique. La vision périphérique du porteur et notamment celle en vision dynamique s'en trouve améliorée. Le confort du porteur est ainsi augmenté. Un tel effet est encore accru si la lentille remplit une « condition surfacique 3Cbis », c'est-à-dire si la lentille présente un premier rapport Rsurfacique3C inférieur à 0,51. Un tel effet est également accru si la lentille remplit la « condition surfacique 3Dbis », c'est-à-dire si la lentille présente en outre un deuxième rapport Rsurfacique3D inférieur à 0,55. Une telle augmentation de l'effet se retrouve aussi lorsque la lentille remplit la « condition surfacique 4Cbis » soit si la lentille présente en outre un troisième rapport Rsurfacique4C inférieur ou égal à 0,75.

La lentille remplit alors les conditions surfaciques 1, 2, 3C et 4C. Une telle combinaison permet que la lentille offre une vision périphérique améliorée. Le confort du porteur s'en trouve accru.

A titre d'illustration, trois lentilles numérotées de 1 à 3 peuvent être considérées. La lentille 1 présente une addition de 1,25 dioptrie, la lentille 2, une addition de 2,00 dioptries et la lentille 3, une addition de 2,75 dioptries. Selon les exemples 1 à 3, la surface complexe remplissant les conditions surfaciques 1, 2, 3 et 4 est portée par la face avant de la lentille mais il est entendu que la surface complexe peut également être portée par la face arrière de la lentille.

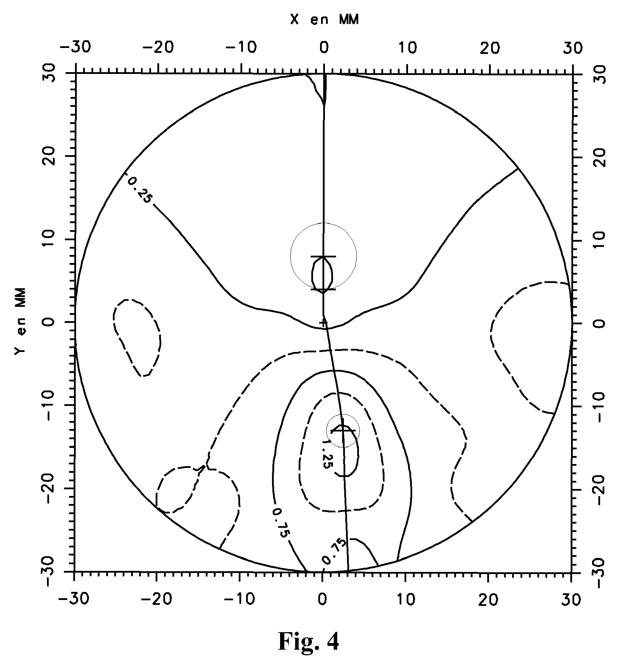

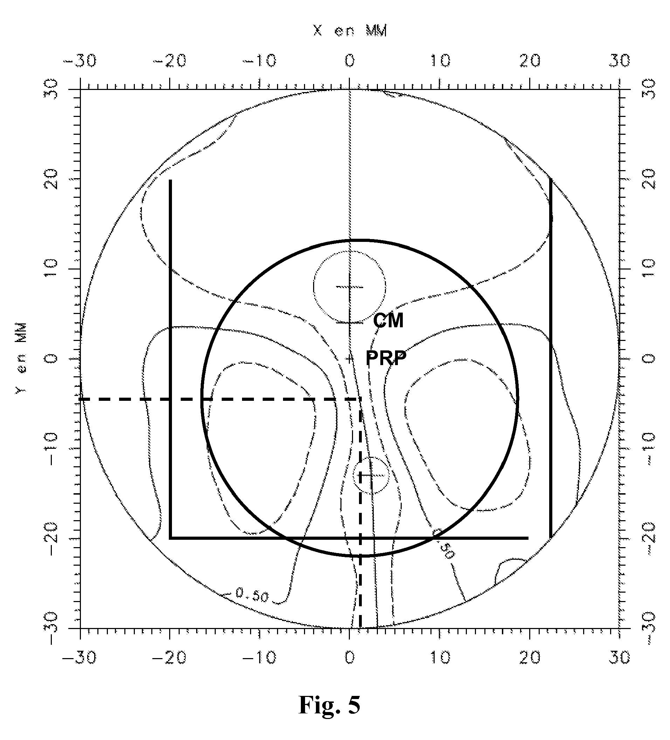

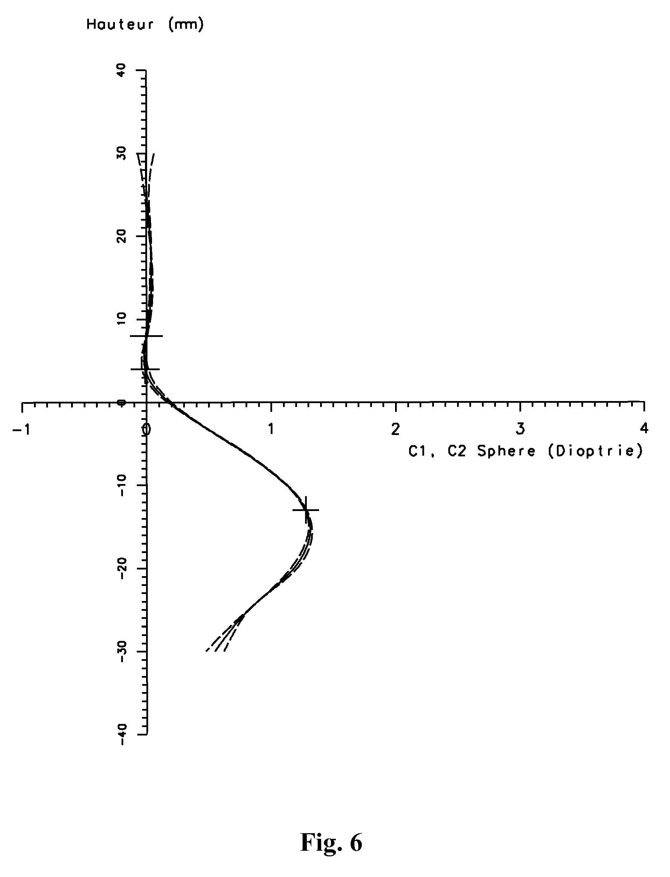

Les figures 4 à 6 montrent des représentations des caractéristiques surfaciques de la surface avant de la lentille 1. La figure 4 montre les lignes d'isosphère moyenne de la surface avant de la lentille ; les axes sont gradués en mm ; la figure 5 montre les lignes d'isocylindre, avec les mêmes axes. On appelle lignes d'isosphère les lignes constituées par les projections dans le plan tangent à la surface progressive en $P_{PRP}$ des points de la surface présentant une sphère moyenne de même valeur. De la même façon, on appelle lignes d'isocylindre les lignes constituées par la projection dans le plan précité des points de la surface présentant un cylindre de même valeur. La figure 6 montre la variation de sphère par rapport au point de référence pour la vision de loin selon la méridienne, avec la définition de sphère donnée plus haut. Le trait plein montre la variation de sphère moyenne par rapport au point de référence pour la vision de loin, et les traits interrompus la variation de la sphère minimale $(n-1)/R_1$ par rapport au point de référence pour la vision de loin et la variation de la sphère maximale $(n-1)/R_2$ par rapport au point de référence pour la vision de loin.

Sur la figure 5 sont également reportés :

- un cercle de diamètre 35 millimètres et centré sur un point situé 8,5 millimètres en dessous de la croix de montage et décalé horizontalement du côté nasal de 1,25 millimètre ;
- un segment regroupant les points de la lentille dans la zone temporale ayant une abscisse de 20 millimètres en valeur absolue et dont l'ordonnée est inférieure à 20 millimètres en valeur absolue
- un segment regroupant les points de la lentille dans la zone nasale ayant une abscisse de 22 millimètres en valeur absolue et dont l'ordonnée est inférieure à 20 millimètres en valeur absolue.

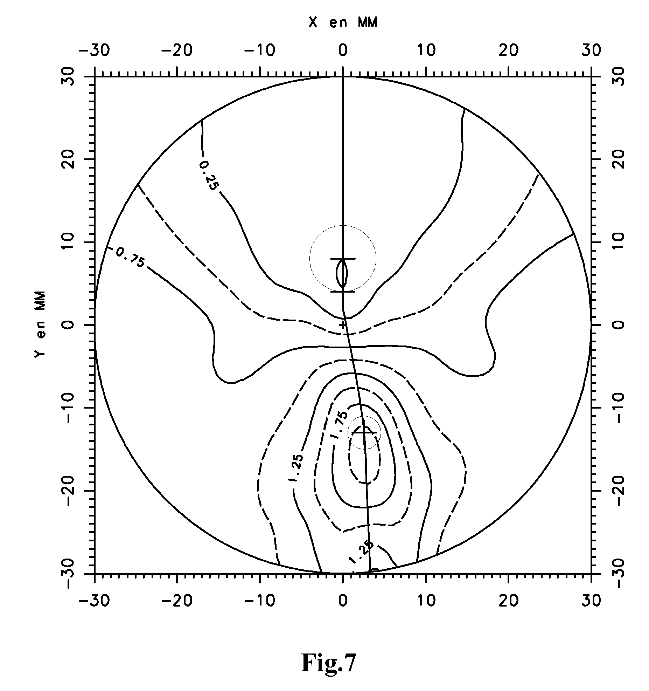

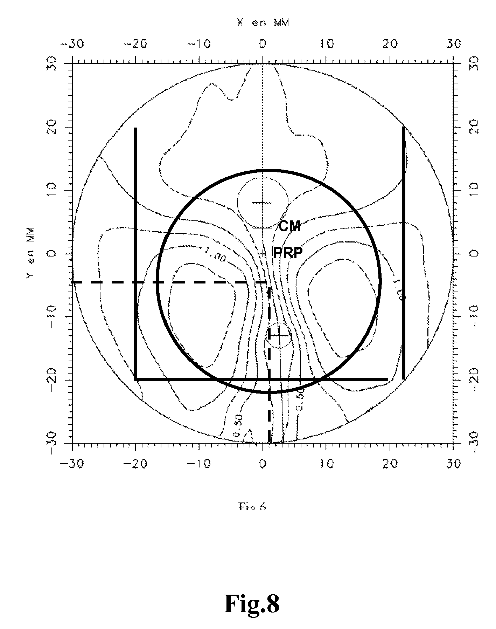

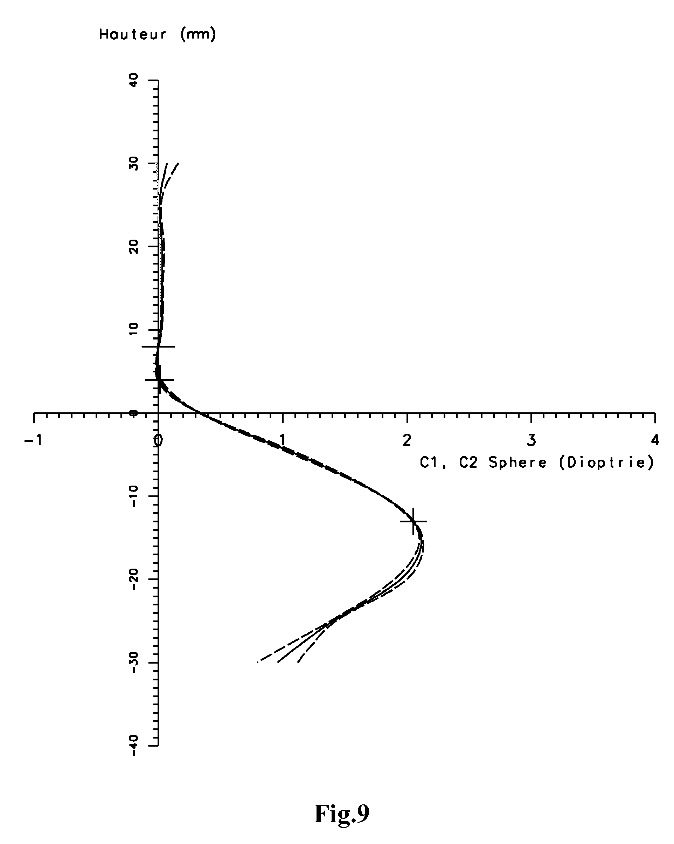

Les figures 7 à 9 montrent des représentations graphiques des caractéristiques surfaciques de la surface avant de la lentille 2, avec les mêmes conventions que les figures 4 à 6. La figure 8 porte les mêmes cercles et segments que ceux représentés sur la figure 5.

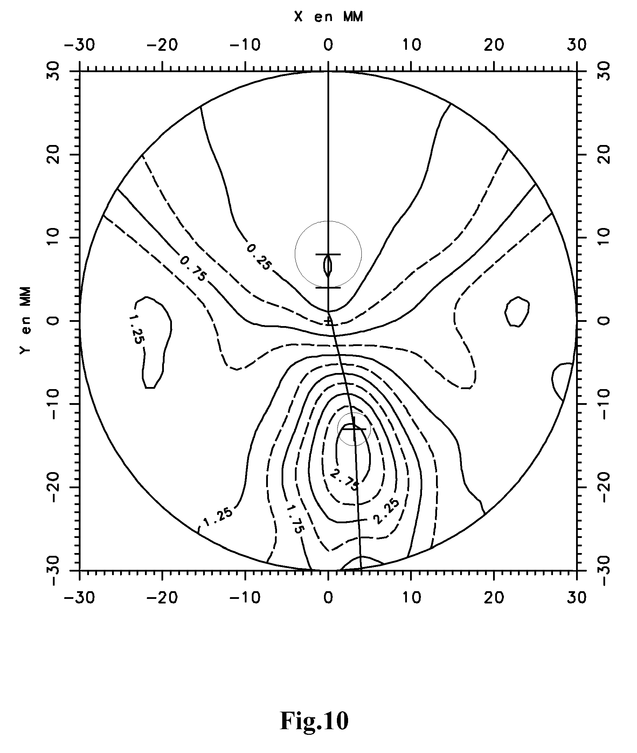

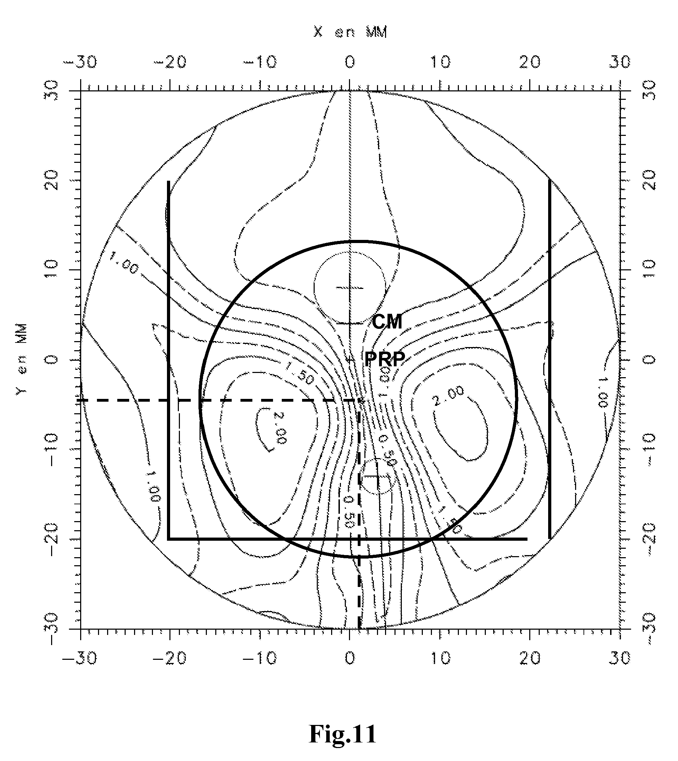

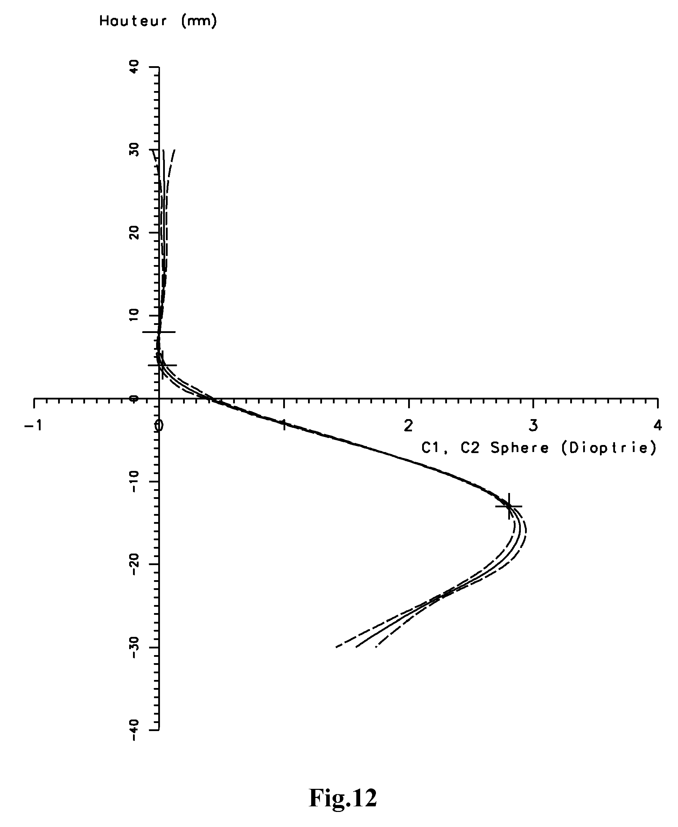

Les figures 10 à 12 montrent des représentations graphiques des caractéristiques surfaciques de la surface avant de la lentille 3, avec les mêmes conventions que les figures 4 à 6. La figure 11 porte les mêmes cercles et segments que ceux représentés sur les figures 5 et 8.

Le tableau 1 présente les valeurs des longueurs de progression pour les trois exemples de lentilles ainsi que les valeurs Dsurfacique2 de la différence de rapport entre la valeur de cylindre et l'addition surfacique en valeur absolue pour tout couple de points de la lentille symétriques par rapport à la croix de montage et ayant la même ordonnée que la croix de montage et une abscisse inférieure à 20 millimètres en valeur absolue pour chacun des trois exemples de lentilles.

_Tableau 1 :_ _Valeur de la longueur de progression et de la valseur Dsurfacique2A pour trois exemple de lentilles._

| Exemple de lentille considéré | Type de lentille | Addition | Longueur de progression (mm) | Dsurfacique2 |
|---|---|---|---|---|
| Exemple 1 | Lentille finie | 1,25 dioptrie | 13.48 | 0.040 |
| Exemple 2 | Lentille finie | 2,00 dioptries | 13.48 | 0.045 |
| Exemple 3 | Lentille finie | 2,75 dioptries | 13.52 | 0.058 |

Pour chacun des exemples 1 à 3, la longueur de progression est inférieure à 14,5 millimètres. La condition surfacique 1 est donc bien remplie par les lentilles des exemples considérés. De plus, les lentilles des exemples 1 et 2 présentent une longueur de progression inférieure à 13,5 millimètres ; elles respectent donc la conditions surfacique 1bis et apportent au porteur un confort amélioré pour l'accès à la vision de près.

Pour chacun des exemples 1 à 3, la valeur Dsurfacique2 est inférieure à 0,2. La condition surfacique 2 est donc bien remplie par les lentilles des exemples considérés. De plus, les lentilles des exemples 1, 2 et 3 présentent une valeur Dsurfacique2 inférieure à 0,1; elles respectent donc aussi la conditions surfacique 2bis et apportent au porteur un confort supplémentaire.

En outre, les valeurs du premier rapport caractéristique Rsurfacique3A et du deuxième rapport caractéristique Rsurfacique4A sont données dans le tableau 2 pour les 3 exemples de lentilles.

*Tableau 2: Rapports surfaciques Rsurfacique3A et Rsurfacique4A pour trois exemples de lentilles.*

| Exemple de lentille considéré | Type de lentille | Addition | Rsurfacique 3A | Rsurfacique 4A |
|---|---|---|---|---|
| Exemple 1 | Lentille finie | 1,25 dioptrie | 0,65 | 0.72 |
| Exemple 2 | Lentille finie | 2,00 dioptries | 0,64 | 0.68 |
| Exemple 3 | Lentille finie | 2,75 dioptries | 0,67 | 0.74 |

Pour chacun des exemples 1 à 3, le rapport Rsurfacique3A est inférieur à 0,7 (valeur limite sur le cercle). La condition surfacique 3A est donc bien remplie par les lentilles des exemples considérés.

Pour chacun des exemples 1 à 3, le rapport Rsurfacique4A est inférieur à 1,05 (valeur limite à l'intérieur du cercle). La condition surfacique 4A est donc bien remplie par les lentilles des exemples considérés.

Les trois exemples de lentilles considérés remplissent donc la combinaison des conditions surfaciques 1, 2, 3A et 4A.

De plus, la lentille de l'exemple 2 présente un rapport Rsurfacique3A inférieur à 0,65. Cela signifie que la lentille de l'exemple 2 remplit la condition surfacique 3Abis et présente un confort encore amélioré par rapport à une lentille dont la surface remplit les conditions surfaciques 1, 2, 3A et 4A.

Les lentilles des exemples 1, 2 et 3 présentent en outre un rapport Rsurfacique4A inférieur à 0,75. Cela signifie qu'elles remplissent également la condition surfacique 4Abis et présentent un confort encore amélioré par rapport à une lentille dont la surface remplit les conditions surfaciques 1, 2, 3A et 4A.

Les valeurs du premier rapport caractéristique Rsurfacique3B et du deuxième rapport caractéristique Rsurfacique4B sont également données dans le tableau 3 pour les trois exemples de lentilles.

*Tableau 3 : Rapports surfaciques Rsurfacique3B et Rsurfacique4B pour trois exemples de lentilles.*

| Exemple de lentille considéré | Type de lentille | Addition | Rsurfacique3B | Rsurfacique4B |
|---|---|---|---|---|
| Exemple 1 | Lentille finie | 1,25 dioptrie | 0,59 | 0.72 |
| Exemple 2 | Lentille finie | 2,00 dioptries | 0,6 | 0.68 |
| Exemple 3 | Lentille finie | 2,75 dioptries | 0,6 | 0.74 |

Pour chacun des exemples 1 à 3, le rapport Rsurfacique3B est inférieur à 0,7 (valeur limite sur le cercle). La condition surfacique 3B est donc bien remplie par les lentilles des exemples considérés.

Pour chacun des exemples 1 à 3, le rapport Rsurfacique4B est inférieur à 1,05 (valeur limite à l'intérieur du cercle). La condition surfacique 4B est donc bien remplie par les lentilles des exemples considérés.

Les trois exemples de lentilles considérés remplissent donc la combinaison des conditions surfaciques 1, 2, 3B et 4B.

De plus, les lentilles des exemples 1, 2 et 3 présentent un rapport Rsurfacique3B inférieur à 0,65. Cela signifie que les lentilles des exemples 1, 2 et 3 remplissent la condition surfacique 3Bbis et présentent un confort encore amélioré par rapport à une lentille dont la surface remplit les conditions surfaciques 1, 2, 3B et 4B.

Les lentilles des exemples 1, 2 et 3 présentent en outre un rapport Rsurfacique4B inférieur à 0,75. Cela signifie qu'elles remplissent également la condition surfacique 4Bbis et présentent un confort encore amélioré par rapport à une lentille dont la surface remplit les conditions surfaciques 1, 2, 3B et 4B.

Les valeurs des premier et deuxième rapports caractéristiques Rsurfacique3C et Rsurfacique3D des conditions surfaciques 3C et 3D et du troisième rapport caractéristique Rsurfacique4C de la condition surfacique 4C sont également données dans le tableau 4 pour les trois exemples de lentilles.

*Tableau 4 : Rapports surfaciques Rsurfacique3C, Rsurfacique3D et Rsurfacique4C pour trois exemples de lentilles.*

| Exemple de lentille considéré | Type de lentille | Addition | Rsurfacique 3C | Rsurfacique 3D | Rsurfacique 4C |
|---|---|---|---|---|---|
| Exemple 1 | Lentille finie | 1,25 dioptrie | 0,45 | 0,53 | 0.72 |
| Exemple 2 | Lentille finie | 2,00 dioptries | 0,5 | 0,52 | 0.68 |

(suite)

| Exemple de lentille considéré | Type de lentille | Addition | Rsurfacique 3C | Rsurfacique 3D | Rsurfacique 4C |
|---|---|---|---|---|---|
| Exemple 3 | Lentille finie | 2,75 dioptries | 0,46 | 0,55 | 0.74 |

Pour chacun des exemples 1 à 3, le rapport Rsurfacique3C est inférieur à 0,72. La condition surfacique 3C est donc bien remplie par les lentilles des exemples considérés.

Pour chacun des exemples 1 à 3, le rapport Rsurfacique3D est inférieur à 0,72. La condition surfacique 3D est donc bien remplie par les lentilles des exemples considérés.

Pour chacun des exemples 1 à 3, le rapport Rsurfacique4C est inférieur à 0,72. La condition surfacique 4C est donc bien remplie par les lentilles des exemples considérés.

Les trois exemples de lentilles considérés remplissent donc la combinaison des conditions surfaciques 1, 2, 3C, 3D et 4C.

En outre, les lentilles des exemples 1 à 3 présentent un rapport Rsurfacique3C inférieur à 0,51. Cela signifie que les lentilles des exemples 1 à 3 remplissent la condition surfacique 3Cbis et présente un confort encore amélioré par rapport à une lentille dont la surface remplit les conditions surfaciques 1, 2, 3C, 3D et 4C.

Les lentilles des exemples 1 à 3 présentent également un rapport Rsurfacique3D inférieur à 0,55. Cela signifie que les lentilles des exemples 1 à 3 remplissent la condition surfacique 3Dbis et présente un confort encore amélioré par rapport à une lentille dont la surface remplit les conditions surfaciques 1, 2, 3C, 3D et 4C.

Les lentilles des exemples 1, 2 et 3 présentent en outre un rapport Rsurfacique4C inférieur à 0,75. Cela signifie qu'elles remplissent également la condition surfacique 4Cbis et présentent un confort encore amélioré par rapport à une lentille dont la surface remplit les conditions surfaciques 1, 2, 3C, 3D et 4C.

Caractérisation optique

Il est considéré une lentille ophtalmique multifocale progressive destinée à un porteur auquel une addition a été prescrite. La lentille présente pour chaque direction de regard, une puissance et un astigmatisme résultant pour des conditions de port standard, chaque direction de regard correspondant à un angle d'abaissement $\alpha$ et un angle d'azimut $\beta$ tel que cela a été défini plus haut en référence aux figures 1 à 3. La lentille présente une croix de montage $C_M$ correspondant à une direction primaire du regard ayant un angle d'abaissement du regard nul et un angle d'azimut nul. La lentille comprend une zone de vision de loin comportant un point de référence pour la vision de loin correspondant à une direction de regard de référence pour la vision de loin, une zone de vision de près comportant un point de référence pour la vision de près correspondant à une direction de regard de référence pour la vision de près. La lentille comporte en outre une zone de vision intermédiaire située entre la zone de vision de loin et la zone de vision de près et une méridienne principale de progression traversant les trois zones et séparant la lentille en une zone temporale et une zone nasale.

La lentille remplit une condition optique dite « condition optique 1 ». Selon la « condition optique 1 », la lentille présente une longueur de progression inférieure à 29°. La condition optique 1 est donc l'expression en terme optique de la condition surfacique 1 qui est exprimée en terme surfacique. Lorsque la longueur de progression est considérée d'un point de vue optique, elle se définit comme la différence d'angle entre la direction primaire du regard et l'angle d'abaissement de regard passant par la méridienne et pour lequel la variation de puissance optique porteur par rapport à la valeur de puissance optique porteur sur le point de référence pour la vision de loin atteint 85 % de l'addition prescrite. Une telle définition est l'expression optique de la définition surfacique précédemment exposée en référence à la condition surfacique 1. Cela permet d'améliorer le confort du porteur par rapport à la stratégie oeil-tête verticale, l'oeil ayant moins à se déplacer dans la direction verticale pour obtenir la correction adaptée à sa vision de près. Un tel effet est encore accru si la lentille remplit une « condition optique 1bis », c'est-à-dire si la lentille présente une longueur de progression inférieure à 27°.

La lentille remplit une condition optique dite « condition optique 2 ». Selon la « condition optique 2 », la lentille présente une différence de rapport, noté Doptique2, entre la valeur d'astigmatisme résultant et l'addition prescrite inférieure à 0,3 en valeur absolue pour tout couple de directions de regard symétriques par rapport à direction primaire du regard ayant un angle d'abaissement nul et un angle d'azimut inférieur à 52° en valeur absolue. On entend par astigmatisme résultant l'écart entre l'astigmatisme prescrit et l'astigmatisme produit par la lentille. La condition optique 2 est donc l'expression en terme optique de la condition surfacique 2 qui est exprimée en terme surfacique. Cela permet d'assurer une certaine symétrie de la répartition de l'astigmatisme résultant pour les directions de regards présentant un même abaissement de regard que la direction de regard passant par la croix de montage. Cela permet ainsi d'améliorer la vision binoculaire pour le porteur en vision de loin. Une telle condition permet d'assurer ainsi un confort optimal au porteur en vision de loin. En effet, lorsque le porteur regarde au loin en décalant légèrement les yeux horizontalement, il regardera à travers la partie nasale d'une lentille avec un oeil et à travers la partie temporale de l'autre lentille avec l'autre oeil. Or, un bon équilibre binoculaire est obtenu si les qualités perçues sont sensiblement les même pour chacun des yeux. Une telle situation correspond à des aberrations optiques perçues sensiblement identiques pour les deux yeux. En garantissant que les valeurs d'astigmatisme résultant normalisées à l'addition prescrite soient sensiblement symétriques de part et d'autre de la croix de montage, l'oeil gauche et l'oeil droit du porteur rencontrent sensiblement les mêmes défauts optiques. Un bon équilibre perceptif entre les deux yeux en vision de loin est ainsi assuré car la zone horizontale au niveau de la croix de montage est la plus sollicitée par un porteur fixant un point en vision de loin tout en décalant les yeux latéralement. Un tel effet est encore accru si la lentille remplit une « condition optique 2bis », c'est-à-dire si la lentille présente une différence de rapport entre la valeur d'astigmatisme résultant et l'addition prescrite inférieure à 0,08 en valeur absolue pour tout couple de directions de regard symétriques par rapport à la direction primaire du regard et ayant un angle d'abaissement nul et un angle d'azimut inférieur à 52° en valeur absolue.

La lentille remplit également une combinaison de conditions optiques 3 et 4 qui permet de limiter les aberrations en périphérie. De telles conditions optiques peuvent s'exprimer de plusieurs manières, la ou les surface(s) remplissant de telles conditions étant la/les mêmes et présentant le même effet d'amélioration du confort du porteur.

La lentille selon l'invention doit ainsi remplir des conditions optiques dites 3A et 4A. On entend par le fait qu'une lentille remplisse la « condition optique 3A » le fait qu'une lentille présente un premier rapport, noté Roptique3A, entre la valeur d'astigmatisme résultant pour l'ensemble des directions de regard passant par un cercle angulaire de diamètre 70° centré sur la direction de regard d'angle d'abaissement 17° en dessous de la croix de montage et d'azimut 2,5° du côté nasal d'une part et l'addition prescrite d'autre part inférieur à 0,88. La condition optique 3A est donc l'expression en terme optique de la condition surfacique 3A qui est exprimée en terme surfacique. En outre, lorsque la lentille remplit la « condition optique 4A », elle présente un deuxième rapport, noté Roptique4A, entre la valeur d'astigmatisme résultant pour l'ensemble des directions de regard passant à l'intérieur dudit cercle angulaire et l'addition prescrite inférieur ou égal à 1. La condition optique 4A est donc l'expression en terme optique de la condition surfacique 4A qui est exprimée en terme surfacique.

La combinaison des conditions 3A et 4A permet de contrôler de manière large les aberrations de la lentille pour l'ensemble des directions de regard passant à l'intérieur du cercle angulaire et de contrôler de manière plus stricte les aberrations pour un ensemble plus réduit de directions de regard, en l'occurrence les directions du regard passant par la périphérie du cercle angulaire. Cela permet donc de limiter les aberrations en vision périphérique. La vision périphérique du porteur et notamment celle en vision dynamique s'en trouve améliorée. Le confort du porteur est ainsi augmenté. Un tel effet est encore accru pour les lentilles selon l'invention, car elles remplissent en outre une « condition optique 3Abis », c'est-à-dire si la lentille présente un premier rapport Roptique3A inférieur à 0,8. La condition optique 3Abis est l'expression en terme optique de la condition surfacique 3Abis qui est exprimée en terme surfacique. Une telle augmentation de l'effet se retrouve aussi lorsque la lentille remplit en outre une « condition optique 4Abis » c'est-à-dire si la lentille présente un deuxième rapport Roptique4A inférieur ou égal à 0,9. La condition optique 4Abis est l'expression en terme optique de la condition surfacique 4Abis qui est exprimée en terme surfacique.

La lentille remplit alors les conditions optiques dites 1, 2, 3A et 4A. Une telle combinaison permet que la lentille offre une vision périphérique améliorée. Le confort du porteur s'en trouve accru.

De manière alternative, non couverte par la présente invention, la lentille peut remplir des conditions optiques dites 3B et 4B. On entend par le fait qu'une lentille remplisse la « condition optique 3B » le fait qu'une lentille présente un premier rapport, noté Roptique3B, entre la valeur d'astigmatisme résultant et l'addition prescrite inférieur à 0,75, pour toute direction de regard ayant un angle d'abaissement de regard de 44° en dessous de la croix de montage, l'azimut étant inférieur à 26° en valeur absolue. La condition optique 3B est l'expression en terme optique de la condition surfacique 3B qui est exprimée en terme surfacique. En outre, lorsque la lentille remplit la « condition optique 4B », elle présente un deuxième rapport, noté Roptique4B, entre la valeur d'astigmatisme résultant et l'addition prescrite inférieur ou égal à 1,1, pour toute direction de regard passant à l'intérieur d'un disque angulaire de diamètre 100° centré sur la direction primaire du regard. Les directions de regard passant par ce disque présentent un angle d'abaissement et un angle d'azimut tels que $\sqrt{\alpha^2 + \beta^2} \leq 100°$.

La condition optique 4B est l'expression en terme optique de la condition surfacique 4B qui est exprimée en terme surfacique. La combinaison des conditions 3B et 4B permet de contrôler de manière large les aberrations de la lentille sur l'ensemble des directions passant à l'intérieur du disque et de contrôler de manière plus stricte les aberrations sur un ensemble de directions plus réduit, en l'occurrence les directions passant par un segment. La combinaison des conditions 3B et 4B permet donc de limiter les aberrations en vision périphérique. La vision périphérique du porteur et notamment celle en vision dynamique s'en trouve améliorée. Le confort du porteur est ainsi augmenté. Un tel effet est encore accru si la lentille remplit en outre une « condition optique 3Bbis », c'est-à-dire si la lentille présente un premier rapport Roptique3B inférieur à 0,6. La condition optique 3B est l'expression en terme optique de la condition surfacique 3B qui est exprimée en terme surfacique. Une telle augmentation de l'effet se retrouve aussi lorsque la lentille remplit en outre une « condition optique 4Bbis » c'est-à-dire si la lentille présente un deuxième rapport Roptique4B. La condition optique 4Bbis est l'expression en terme optique de la condition surfacique 4Bbis qui est exprimée en terme surfacique.

La lentille remplit alors les conditions optiques 1, 2, 3B et 4B. Une telle combinaison permet que la lentille offre une vision périphérique améliorée. Le confort du porteur s'en trouve accru.

En variante, la lentille peut remplir aussi les conditions optiques 3C et/ou 3D et 4C. On entend par le fait qu'une lentille remplisse la « condition optique 3C » le fait qu'une lentille présente un premier rapport, noté Roptique3C, entre la valeur d'astigmatisme résultant et l'addition prescrite inférieur à 0,9, pour toute direction de regard passant par la zone temporale présentant un azimut de 40° et un angle d'abaissement inférieur à 32° en valeur absolue. La condition optique 3C est l'expression en terme optique de la condition surfacique 3C qui est exprimée en terme surfacique. La lentille peut alternativement ou en supplément de la condition optique 3C remplir une condition optique 3D. On entend par le fait qu'une lentille remplisse la « condition optique 3D » le fait qu'une lentille présente un deuxième rapport, noté Roptique3D, entre l'astigmatisme résultant et l'addition inférieur à 0,85, pour toute direction de regard passant par la zone nasale et présentant un azimut de 38° et un angle d'abaissement inférieur à 32° en valeur absolue. La condition optique 3D est l'expression en terme optique de la condition surfacique 3D qui est exprimée en terme surfacique. En outre, lorsque la lentille remplit la « condition optique 4C », elle présente un troisième rapport, noté Roptique4C, entre la valeur d'astigmatisme résultant et l'addition prescrite inférieur ou égal à 1,2, pour toute direction de regard passant par un disque angulaire de diamètre 100° centré sur la direction primaire de regard. Les directions de regard passant par ce disque présentent un angle d'abaissement et un angle d'azimut tels que $\sqrt{\alpha^2 + \beta^2} \leq 100°$.

La condition optique 4C est l'expression en terme optique de la condition surfacique 4C qui est exprimée en terme surfacique. La combinaison des conditions 3C et/ou 3D et 4C permet de contrôler de manière large les aberrations de la lentille pour l'ensemble des directions passant par l'intérieur du disque et de contrôler de manière plus stricte les aberrations pour un ensemble plus réduit de directions, en l'occurrence les directions passant par un segment vertical situé du côté temporal ou nasal. Cela permet donc de limiter les aberrations en vision périphérique. La vision périphérique du porteur et notamment celle en vision dynamique s'en trouve améliorée. Le confort du porteur est ainsi augmenté. Un tel effet est encore accru si la lentille remplit une « condition optique 3Cbis », c'est-à-dire si la lentille présente un premier rapport Roptique3C inférieur à 0,65. La condition optique 3Cbis est l'expression en terme optique de la condition surfacique 3Cbis qui est exprimée en terme surfacique. Un tel effet est encore accru si la lentille remplit la « condition optique 3Dbis », c'est-à-dire si la lentille présente en outre un deuxième rapport Roptique3D inférieur à 0,8. La condition optique 3Dbis est l'expression en terme optique de la condition surfacique 3Dbis qui est exprimée en terme surfacique. Une telle augmentation de l'effet se retrouve aussi lorsque la lentille remplit la « condition optique 4Cbis » si la lentille présente en outre un troisième rapport Roptique4C inférieur ou égal à 0,85. La condition optique 4Cbis est l'expression en terme optique de la condition surfacique 4Cbis qui est exprimée en terme surfacique.

La lentille remplit alors les conditions optiques 1, 2, 3C et 4C. Une telle combinaison permet que la lentille offre une vision périphérique améliorée. Le confort du porteur s'en trouve accru.

A titre d'illustration, des lentilles 4, 5 et 6. La lentille 4 présente une addition de 1,25 dioptrie, la lentille 5 une addition de 2,00 dioptries et la lentille 6 une addition de 2,75 dioptries. Ces valeurs d'addition correspondent aux additions prescrites. Selon les exemples 4, 5 et 6, la surface complexe est répartie entre les deux faces mais il est entendu que la surface complexe peut être portée uniquement par la face avant de la lentille ou par la face arrière de la lentille.

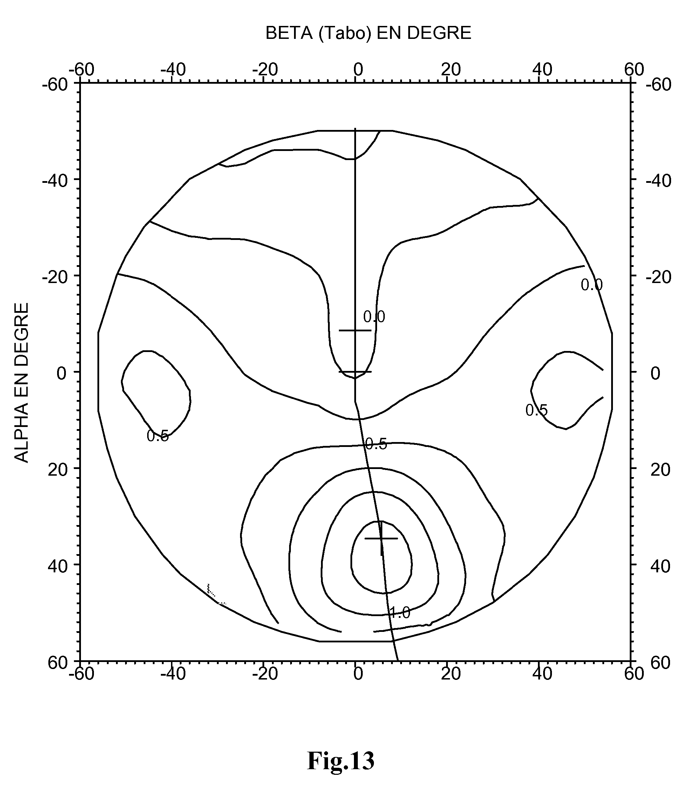

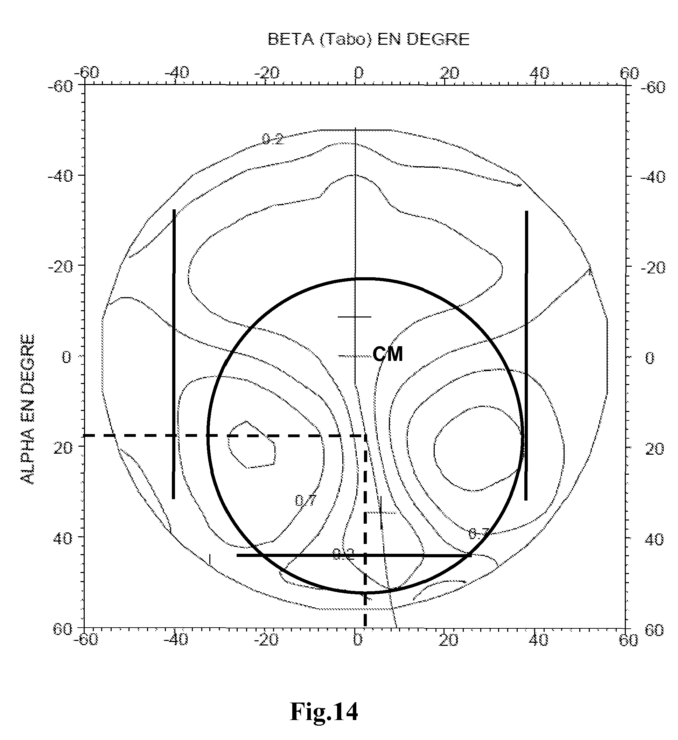

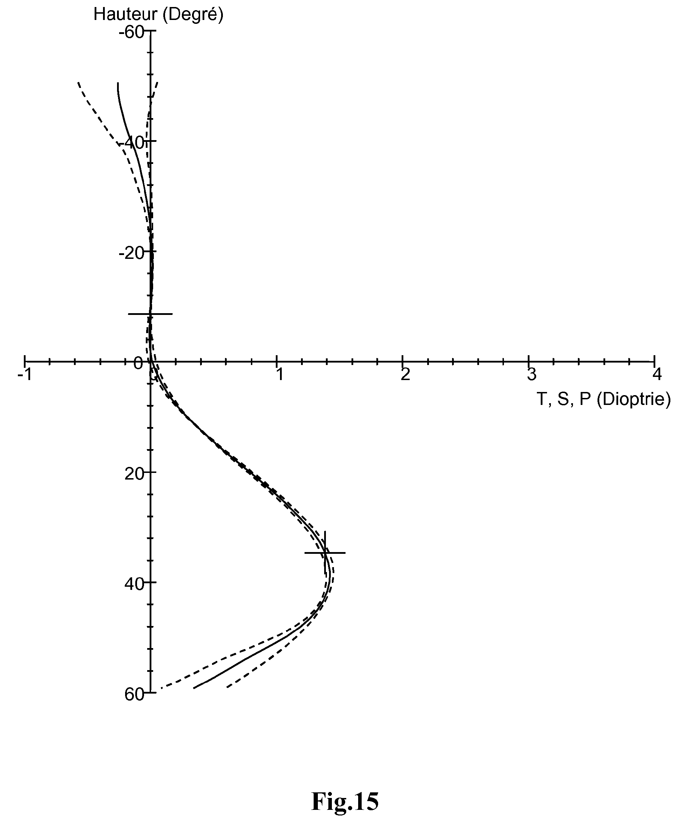

Les caractéristiques optiques présentées ensuite dans les figures 13 à 15 ont été obtenues par calcul. Les figures 13 à 15 montrent des représentations graphiques des caractéristiques optiques de la lentille 4. La figure 13 est une représentation graphique des lignes d'égale puissance, i.e. correspondant à des directions de regard ayant une valeur de puissance identique. Les axes des abscisses et des ordonnées donnent respectivement des angles $\beta$ et $\alpha$ tels que définis plus haut. La figure 13 permet ainsi de visualiser une carte du défaut de puissance. La figure 14 montre, avec les mêmes axes, les lignes d'égal astigmatisme résultant. La figure 14 est ainsi une représentation graphique de l'astigmatisme résultant. La figure 15 montre la puissance selon la méridienne, avec la définition de puissance donnée plus haut. Les abscisses sont graduées en dioptries, et les ordonnées donnent l'abaissement de la direction de regard ; le trait plein montre la puissance, et les traits interrompus les quantités 1/JT et 1/JS définies à la figure 2, pour des distances objets correspondant à un ergorama représentatif des distances des points objets dans chaque direction du regard et simulant un espace objet moyen. La figure 15 donne ainsi accès au défaut de puissance et l'astigmatisme résultant selon la méridienne.

Sur la figure 14 sont également reportés

- un cercle de diamètre 70° centré sur une direction de regard ayant un angle d'abaissement de 17° en dessous de la croix de montage et ayant un angle d'azimut de 2,5° ;

- un segment regroupant les points de la lentille dans la zone temporale ayant un angle d'azimut de 40° et un angle d'abaissement inférieur à 32° en valeur absolue ;
- un segment regroupant les points de la lentille dans la zone nasale ayant un angle d'azimut de 38° en valeur absolue et un angle d'abaissement est inférieur à 32° en valeur absolue.

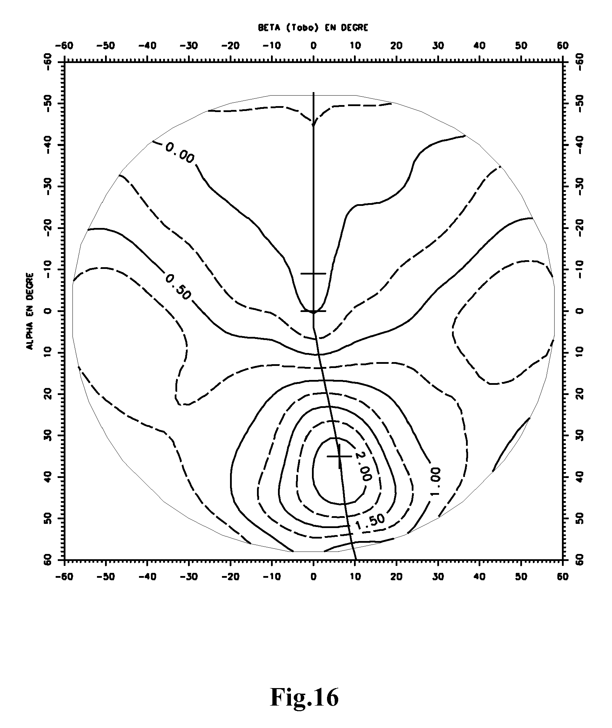

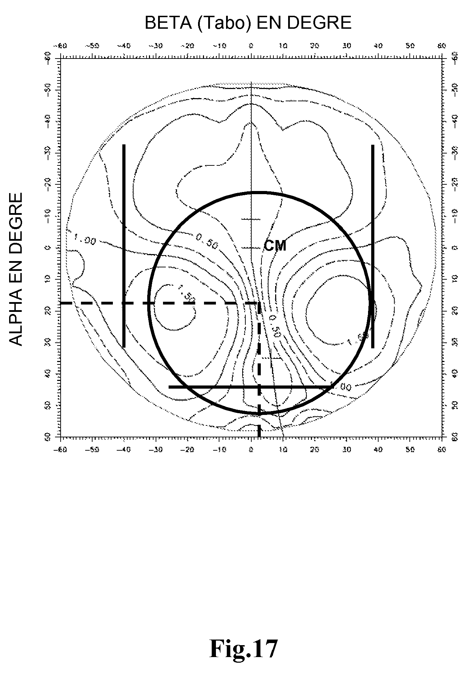

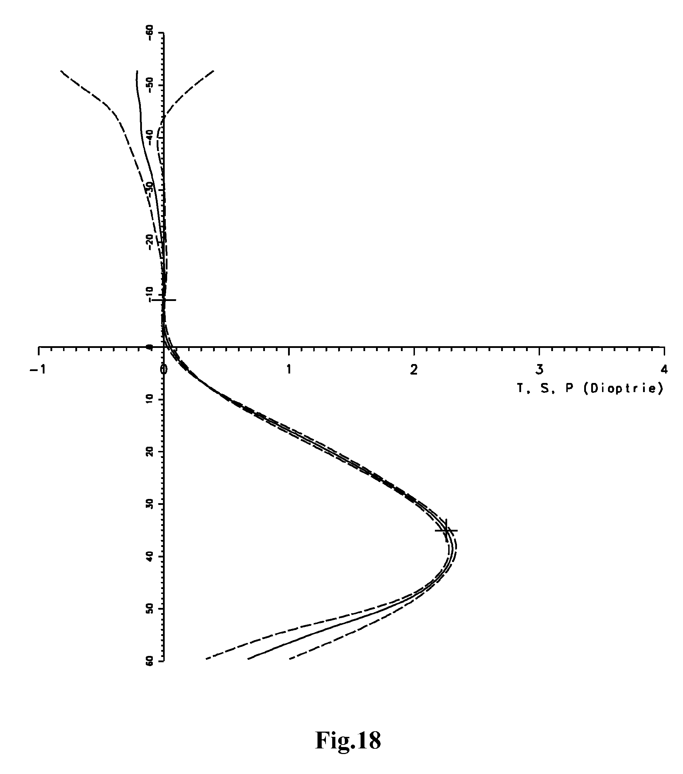

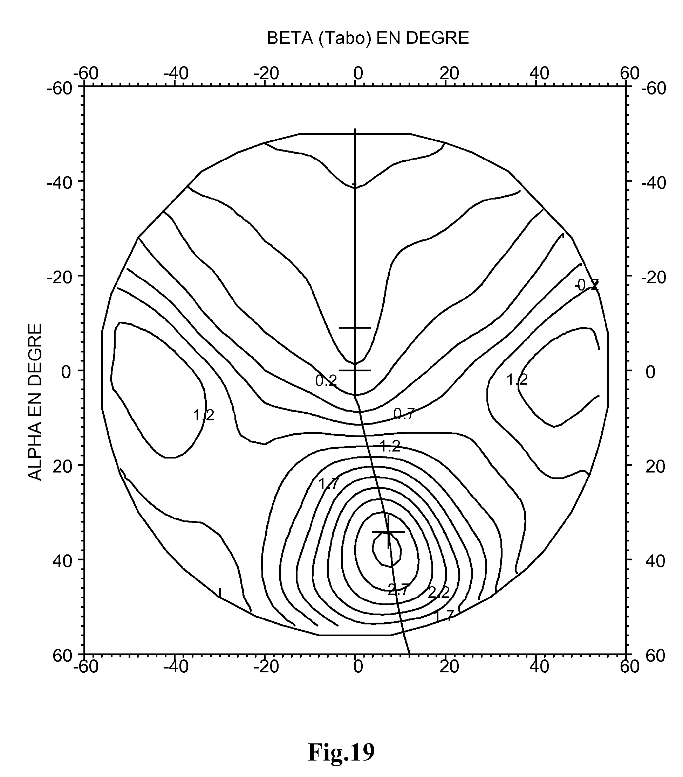

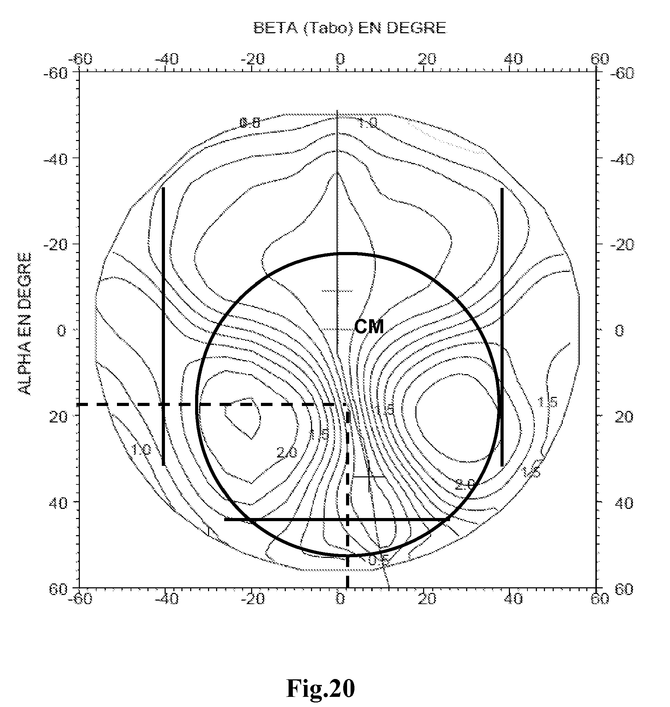

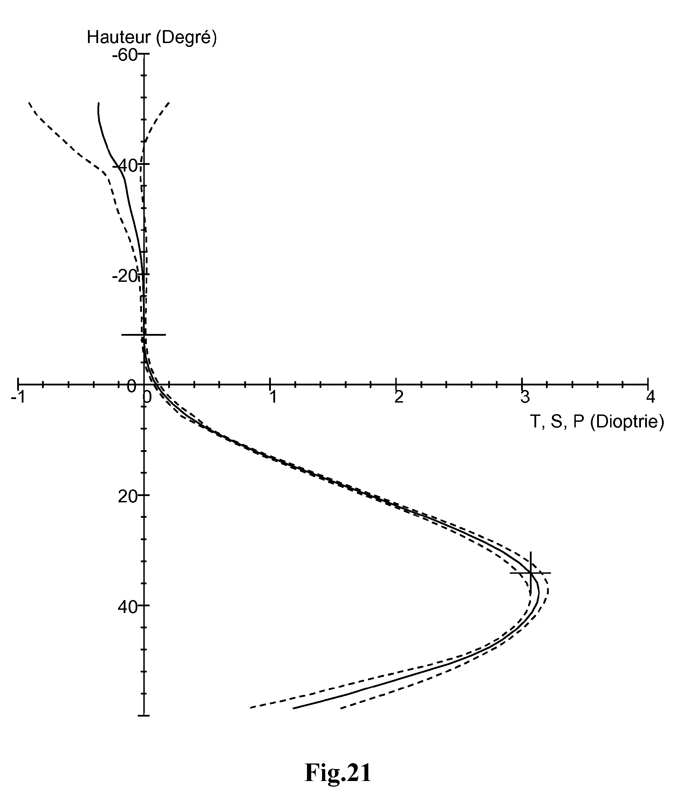

Les figures 16 à 18 montrent des représentations graphiques des caractéristiques optique de la lentille 5, avec les mêmes conventions que les figures 13 à 15. La figure 17 porte les même cercles et segments que ceux représentés sur la figure 14. Les figures 19 à 21 montrent des représentations graphiques des caractéristiques optique de la lentille 6, avec les mêmes conventions que les figures 13 à 15. La figure 20 porte les même cercles et segments que ceux représentés sur les figures 14 et 17.

Le tableau 5 présente les valeurs des longueurs de progression pour les trois exemples de lentilles ainsi que les valeurs Doptique2 maximales de la différence de rapport entre la valeur d'astigmatisme résultant et l'addition prescrite en valeur absolue pour tout couple de directions de regard symétriques par rapport à la direction primaire du regard et ayant un angle d'abaissement nul et un angle d'azimut inférieur à 52° en valeur absolue pour chacune des trois exemples de lentilles.

*Tableau 5 : Valeur de la longueurs de progression et de la valeur Doptique2 pour trois exemples de lentilles.*

| Exemple de lentille considéré | Type de lentille | Addition | Longueur de progression (°) | Doptique2 |
|---|---|---|---|---|
| Exemple 4 | Lentille finie | 1,25 dioptrie | 26.3 | 0.059 |
| Exemple 5 | Lentille finie | 2,00 dioptries | 25.8 | 0.066 |
| Exemple 6 | Lentille finie | 2,75 dioptries | 25.7 | 0.085 |

Pour chacun des exemples 4 à 6, la longueur de progression est inférieure à 29°. La condition surfacique 1 est donc bien remplie par les lentilles des exemples considérés. De plus, les lentilles des exemples 4 à 6 présentent une longueur de progression inférieure à 27° ; elles respectent donc la condition optique 1bis et apportent au porteur un confort amélioré pour l'accès à la vision de près.

Pour chacun des exemples 4 à 6, la valeur maximale Doptique2 est inférieure à 0,3. La condition surfacique 2 est donc bien remplie par les lentilles des exemples considérés. De plus, les lentilles des exemples respectent aussi la condition Doptique2bis avec une valeur maximale inférieure à 0,08.

En outre, les valeurs du rapport caractéristique Roptique3A de la condition optique 3A et du rapport caractéristique Roptique4A de la condition optique 4A sont données dans le tableau 6 pour les exemples de lentilles 4, 5 et 6.

*Tableau 6 : Rapports Roptique3A et Roptique4A pour trois exemples de lentilles.*

| Exemple de lentille considéré | Addition | Roptique3A | Roptique4A |
|---|---|---|---|
| Exemple 4 | 1,25 dioptrie | 0,8 | 0.86 |
| Exemple 5 | 2,00 dioptries | 0,78 | 0.82 |
| Exemple 6 | 2,75 dioptries | 0,839 | 0.88 |

Pour chacun des exemples 4, 5 et 6, le rapport Roptique3A est inférieur à 0,88 (valeur limite sur le cercle). La condition optique 3A est donc bien remplie par les lentilles des exemples considérés.

Pour chacun des exemples 4, 5 et 6, le rapport Roptique4A est inférieur à 1 (valeur limite à l'intérieur cercle). La condition optique 4A est donc bien remplie par les lentilles des exemples considérés.

Les trois exemples de lentilles considérés remplissent donc la combinaison des conditions surfaciques 1, 2, 3A et 4A.

De plus, la lentille de l'exemple 5 présente un rapport Roptique3A inférieur à 0,8. Cela signifie que la lentille de l'exemple 5 correspond à un mode de réalisation de l'invention, car elle remplit la condition optique 3Abis et présente un confort encore amélioré par rapport à une lentille dont la surface remplit les conditions optiques 1, 2, 3A et 4A.

Les lentilles des exemples 4, 5 et 6 présentent en outre un rapport Roptique4A inférieur à 0,9. Cela signifie qu'elles remplissent la condition optique 4Abis et présentent un confort encore amélioré par rapport à une lentille dont la surface remplit les conditions optiques 1, 2, 3A et 4A.

Les valeurs du rapport caractéristique Roptique3B de la condition optique 3B et du rapport caractéristique Roptique4B de la condition optique 4B sont également données dans le tableau 7 pour les exemples de lentilles 4, 5 et 6.

*Tableau 7 : Rapports Roptique3B et Roptique4B pour trois exemples de lentilles.*

| Exemple de lentille considéré | Type de lentille | Addition | Roptique3B | Roptique4B |
|---|---|---|---|---|
| Exemple 4 | Lentille finie | 1,25 dioptrie | 0,554 | 0.86 |
| Exemple 5 | Lentille finie | 2,00 dioptries | 0,5 | 0.82 |
| Exemple 6 | Lentille finie | 2,75 dioptries | 0,567 | 0.88 |

Pour chacun des exemples 4, 5 et 6, le rapport Roptique3B est inférieur à 0,75. La condition optique 3B est donc bien remplie par les lentilles des exemples considérés.

Pour chacun des exemples 4, 5 et 6, le rapport Roptique4B est inférieur à 1.1. La condition optique 4B est donc bien remplie par les lentilles des exemples considérés.

Les trois exemples de lentilles considérés remplissent donc la combinaison des conditions surfaciques 1, 2, 3B et 4B.

De plus, les lentilles des exemples 4, 5 et 6, présentent un rapport Roptique3B inférieur à 0,6. Cela signifie que les lentilles des exemples 4, 5 et 6, remplissent la condition optique 3Bbis et présente un confort encore amélioré par rapport à une lentille dont la surface remplit les conditions optiques 1, 2, 3B et 4B.

Les lentilles des exemples 4, 5 et 6 présentent en outre un rapport Roptique4B inférieur à 0,9. Cela signifie qu'elles remplissent la condition optique 4Bbis et présentent un confort encore amélioré par rapport à une lentille dont la surface remplit les conditions optiques 1, 2, 3B et 4B.

Les valeurs du premier rapport caractéristique Roptique3C de la condition optique 3C, du deuxième rapport caractéristique Roptique3D de la condition optique 4C et du troisième rapport caractéristique Roptique4C sont également données dans le tableau 8 pour les exemples de lentilles 4, 5 et 6.

*Tableau 8 : Rapports Roptique3C, Roptique3D et Roptique4C pour trois exemples de lentilles.*

| Exemple de lentille considéré | Type de lentille | Addition | Roptique3C | Roptique3D | Roptique4C |
|---|---|---|---|---|---|
| Exemple 4 | Lentille finie | 1,25 dioptrie | 0,58 | 0,79 | 0.86 |
| Exemple 5 | Lentille finie | 2,00 dioptries | 0,63 | 0,77 | 0.82 |
| Exemple 6 | Lentille finie | 2,75 dioptries | 0,598 | 0,824 | 0.88 |

Pour chacun des exemples 4, 5 et 6, le rapport Roptique3C est inférieur à 0,9. La condition optique 3C est donc bien remplie par les lentilles des exemples considérés.

Pour chacun des exemples 4, 5 et 6, le rapport Roptique3D est inférieur à 0,85. La condition optique 3D est donc bien remplie par les lentilles des exemples considérés.

Pour chacun des exemples 4, 5 et 6, le rapport Roptique4C est inférieur à 1,2. La condition optique 4C est donc bien remplie par les lentilles des exemples considérés.

Les trois exemples de lentilles considérés remplissent donc la combinaison des conditions surfaciques 1, 2, 3C, 3D et 4C.

De plus, les lentilles des exemples 4, 5 et 6, présentent un rapport Roptique3C inférieur à 0,65. Cela signifie que les lentilles des exemples 4, 5 et 6, remplissent la condition optique 3Cbis et présente un confort encore amélioré par rapport à une lentille dont la surface remplit les conditions optiques 1, 2, 3C, 3D et 4C.

De plus, les lentilles des exemples 4, 5 et 6, présentent un rapport Roptique3D inférieur à 0,8. Cela signifie que les lentilles des exemples 4, 5 et 6, remplissent la condition optique 3Dbis et présente un confort encore amélioré par rapport à une lentille dont la surface remplit les conditions optiques 1, 2, 3C, 3D et 4C.

Les lentilles des exemples 4, 5 et 6 présentent en outre un rapport Roptique4C inférieur à 0,85. Cela signifie qu'elles remplissent la condition optique 4Cbis et présentent un confort encore amélioré par rapport à une lentille dont la surface remplit les conditions optiques 1, 2, 3C, 3D et 4C.

La combinaison des différentes conditions n'est satisfaite par aucunes des lentilles ophtalmiques multifocales de l'état de la technique testées par la demanderesse. Ceci vaut à la fois pour la partie caractérisation optique et la partie caractérisation surfacique.

En caractérisation surfacique, les combinaisons décrites permettent de définir une surface portée par une lentille semi-finie. Pour le cas d'une lentille finie, les combinaisons de caractéristiques exprimées en terme optique ou en terme surfacique permettent d'améliorer le confort du porteur portant la lentille.

Les lentilles qu'elles soient finies ou semi-finies peuvent faire partie d'un équipement visuel pour améliorer le confort du porteur de l'équipement visuel.

Par ailleurs, les lentilles proposées ci-dessus peuvent être déterminés par des procédés de détermination. Ceux-ci peuvent être mis en oeuvre dans le cadre d'un procédé d'optimisation de lentille ophtalmique destinée à un porteur de prescription connue. Un tel procédé d'optimisation peut être celui décrit dans le document EP 0 990939 ou le document EP 1 920 291. Ainsi, comme cela est connu de l'homme du métier, la surface des lentilles progressives s'obtient par optimisation numérique à l'aide d'un calculateur, en fixant des conditions aux limites pour un certain nombre de paramètres de la lentille. On peut utiliser comme conditions aux limites un ou plusieurs des critères définis plus haut.

## Revendications

1. Une lentille ophtalmique multifocale progressive destinée à un porteur auquel une addition, une valeur de puissance en vision de loin (VL), une valeur d'axe et d'amplitude d'astigmatisme ont été prescrites, la lentille présentant :

   - pour chaque direction de regard, une puissance et un astigmatisme résultant pour des conditions de port standard avec une distance lentille-oeil de 12 mm, un angle pantoscopique de 8° et une valeur de galbe de 0°, chaque direction de regard correspondant à un angle d'abaissement ($\alpha$) et un angle d'azimut ($\beta$) ;

   la lentille comprenant :

   - une zone de vision de loin comportant un point de référence pour la vision de loin correspondant à une direction de regard de référence pour la vision de loin ;
   - une zone de vision de près comportant un point de référence pour la vision de près correspondant à une direction de regard de référence pour la vision de près ;
   - une zone de vision intermédiaire située entre la zone de vision de loin et la zone de vision de près ;
   - une méridienne principale de progression traversant les trois zones et séparant la lentille en une zone temporale et une zone nasale ;
   - un point de référence prisme ($P_{PRP}$) situé au centre d'un segment reliant des micro-gravures ;
   - une croix de montage ($C_M$) située 8° au-dessus du point de référence prisme ($P_{PRP}$) et correspondant à une direction primaire du regard ayant un angle d'abaissement du regard nul et un angle d'azimut nul ;
   - une longueur de progression inférieure à 29°, la longueur de progression étant définie comme la différence d'angle entre la direction primaire du regard et l'angle d'abaissement de regard passant par la méridienne et pour lequel la variation de puissance optique porteur par rapport à la valeur de puissance optique porteur sur le point de référence pour la vision de loin atteint 85 % de l'addition prescrite ;
   - une différence de rapport entre la valeur d'astigmatisme résultant et l'addition prescrite inférieure à 0,3 en valeur absolue pour tout couple de directions de regard symétriques par rapport à la direction primaire du regard et ayant un angle d'abaissement nul et un angle d'azimut inférieur à 52° en valeur absolue ;
   - un premier rapport (Roptique3A) entre :

     • la valeur d'astigmatisme résultant pour l'ensemble des directions de regard passant par un cercle angulaire de diamètre 70° centré sur une direction de regard ayant un angle d'abaissement de 17° en dessous de la croix de montage et ayant un angle d'azimut de 2,5° en valeur absolue du côté nasal, et
     • l'addition surfacique

   inférieur à 0,8; et
   - un deuxième rapport (Roptique4A) entre :

     • la valeur d'astigmatisme résultant pour l'ensemble des directions de regard passant à l'intérieur dudit cercle et
     • l'addition prescrite

   inférieur ou égal à 1.

2. La lentille selon la revendication 1, dans laquelle le deuxième rapport (Roptique4A) est inférieur ou égal à 0,9.

3. La lentille selon l'une quelconque des revendications 1 ou 2, dans laquelle la différence de rapport entre la valeur d'astigmatisme résultant et l'addition prescrite est inférieure à 0,08 en valeur absolue pour tout couple de directions de regard symétriques par rapport à la direction primaire du regard et ayant un angle d'abaissement nul et un angle d'azimut inférieur à 52° en valeur absolue.

4. La lentille selon l'une des revendications 1 à 3, dans laquelle la longueur de progression est inférieure à 27°.

5. Un équipement visuel comprenant au moins l'une des lentilles selon l'une des revendications 1 à 4.

**Patentansprüche**

1. Progressive Mehrstärken-Augenlinse, die für einen Träger bestimmt ist, dem die Addition eines Weitsicht-Brechungswertes (VL) und eines Astigmatismusachsen- und Astigmatismusamplitudenwertes verordnet worden sind, wobei die Linse Folgendes umfasst:

   - für jede Blickrichtung eine resultierende Brechungsleistung und einen resultierenden Astigmatismus für Standardtragbedingungen mit einem Linsen-Augen-Abstand von 12 mm, einem pantoskopischen Winkel von 8° und einem Rundungswert von 0°, wobei jede Blickrichtung einem Absenkungswinkel ($\alpha$) und einem Azimutwinkel ($\beta$) entspricht;

   wobei die Linse Folgendes umfasst:

   - eine Weitsichtzone, die einen Referenzunkt für die Weitsicht aufweist, der eine Referenz-Blickrichtung für die Weitsicht entspricht;
   - eine Nahsichtzone, die einen Referenzpunkt für die Nahsicht aufweist, der eine Referenz-Blickrichtung für die Nahsicht entspricht;
   - eine Zwischensichtzone, die sich zwischen der Weitsichtzone und der Nahsichtzone befindet;
   - einen Progressions-Hauptmeridian, der durch die drei Zonen verläuft und die Linse in eine Schläfenzone und eine Nahsichtzone unterteilt;
   - einen Prismenreferenzpunkt ($P_{PRP}$), der sich im Zentrum eines Segments befindet, das Mikrogravuren verbindet;
   - ein Montagekreuz ($C_M$), das sich 8° über dem Prismenreferenzpunkt ($P_{PRP}$) befindet und einer primären Blickrichtung entspricht, die einen Blickabsenkungswinkel von null und einen Azimutwinkel von null besitzt;
   - eine Progressionslänge kleiner als 29°, wobei die Progressionslänge definiert ist als die Winkeldifferenz zwischen der primären Blickrichtung und dem Blickabsenkungswinkel, der durch den Meridian verläuft und für den die Veränderung der Brechungsleistung am Träger in Bezug auf die Brechungsleistung am Träger am Referenzpunkt für die Weitsicht 85 % der verordneten Addition erreicht;
   - eine Verhältnisdifferenz zwischen dem resultierenden Astigmatismuswert und der verordneten Addition kleiner als 0,3 dem Absolutwert nach für jedes Paar symmetrischer Blickrichtungen in Bezug auf die primäre Blickrichtung, die einen Absenkungswinkel von null und einen Azimutwinkel kleiner als 52° dem Absolutwert nach besitzt;
   - ein erstes Verhältnis (Roptisch3A) zwischen:

      • dem resultierenden Astigmatismuswert für die Gesamtheit der Blickrichtungen, die durch einen Ring mit einem Durchmesser von 70° verlaufen, der auf eine Blickrichtung zentriert ist, die einen Absenkungswinkel von 17° unterhalb des Montagekreuzes besitzt und einen Azimutwinkel von 2,5° dem Absolutwert nach auf der Nasenseite besitzt, und
      • einer Oberflächenaddition kleiner als 0,8; und

   - ein zweites Verhältnis (Roptisch4A) zwischen:

      • dem resultierenden Astigmatismuswert für die Gesamtheit von Blickrichtungen, die durch den Ring verlaufen, und
      • der verordneten Addition kleiner oder gleich 1.

2. Linse nach Anspruch 1, wobei das zweite Verhältnis (Roptisch4A) kleiner oder gleich 0,9 ist.

3. Linse nach einem der Ansprüche 1 oder 2, wobei die Verhältnisdifferenz zwischen dem resultierenden Astigmatismuswert und der verordneten Addition kleiner als 0,08 dem Absolutwert nach für jedes Paar symmetrischer Blickrichtungen in Bezug auf die primäre Blickrichtung, die einen Absenkungswinkel von null und einen Azimutwinkel kleiner als 52° dem Absolutwert nach besitzt, ist.

**4.** Linse nach einem der Ansprüche 1 bis 3, wobei die Progressionslänge kleiner als 27° ist.

**5.** Visuelle Ausrüstung, die wenigstens eine der Linssen nach einem der Ansprüche 1 bis 4 enthält.

**Claims**

**1.** Progressive multifocal ophthalmic lens intended for a wearer to whom an addition, a far-vision (FV) power value and an astigmatism axis and amplitude have been prescribed, the lens having:

- for each gaze direction, a power and a resulting astigmatism under standard wear conditions with a lens-eye distance of 12 mm, a pantoscopic angle of 8° and a face-form angle of 0°, each gaze direction corresponding to a lowering angle ($\alpha$) and an azimuthal angle ($\beta$);

the lens having:

- a far-vision zone containing a far-vision reference point corresponding to a far-vision reference gaze direction;
- a near-vision zone containing a near-vision reference point corresponding to a near-vision reference gaze direction;
- an intermediate-vision zone located between the far-vision zone and the near-vision zone;
- a principal progression meridian passing through the three zones and separating the lens into a temporal zone and a nasal zone;
- a prism reference point ($P_{PRP}$) located at the centre of a segment connecting micro-engravings;
- a fitting cross ($C_M$) located 8° above the prism reference point ($P_{PRP}$) and corresponding to a primary gaze direction having a gaze lowering angle of zero and an azimuthal angle of zero;
- a progression length smaller than 29°, the progression length being defined as the angular difference between the primary gaze direction and the lowering angle of the gaze passing through the meridian, for which angle the variation in wearer optical power relative to the wearer optical power value at the far-vision reference point reaches 85% of the prescribed addition;
- a difference in the ratio of the resulting astigmatism value and the prescribed addition smaller than 0.3 in absolute value for any pair of gaze directions that are symmetric about the primary direction of the gaze and that have a lowering angle of zero and a azimuthal angle lower than 52° in absolute value;
- a first ratio (Roptique3A) of:

  • the resulting astigmatism value for all the gaze directions passing through an angular circle of 70° diameter centred on a gaze direction having a lowering angle of 17° below the fitting cross and having an azimuthal angle of 2.5° in absolute value on the nasal side; to
  • the surficial addition

lower than 0.8; and
- a second ratio (Roptique4A) of:

  • the resulting astigmatism value for all the gaze directions passing through the interior of said circle; to
  • the prescribed addition

lower than or equal to 1.

**2.** Lens according to Claim 1, in which the second ratio (Roptique4A) is lower than or equal to 0.9.

**3.** Lens according to either one of Claims 1 and 2, in which the difference in the ratio of the resulting astigmatism value to the prescribed addition is lower than 0.08 in absolute value for any pair of gaze directions that are symmetric about the first direction of the gaze and that have a lowering angle of zero and an azimuthal angle lower than 52° in absolute value.

**4.** The lens according to one of Claims 1 to 3, in which the progression length is smaller than 27°.

**5.** A piece of visual equipment comprising at least one of the lenses according to one of Claims 1 to 4.

FIG. 1

**Fig. 2**

FIG. 3

**Fig. 4**

Fig. 5

**Fig. 6**

**Fig.7**

Fig.8

Fig.9

**Fig.10**

**Fig.11**

**Fig.12**

Fig.13

Fig.14

**Fig.15**

**Fig.16**

Fig.17

**Fig.18**

BETA (Tabo) EN DEGRE

Fig.19

**Fig.20**

**Fig.21**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- US 5488442 A
- FR 2704327 A
- EP 0990939 A
- US 5270746 A
- EP 0461624 A
- WO 9812590 A
- EP 1744202 A1
- FR 2753805 A
- US 6318859 A
- EP 1920291 A